# EUROPÄISCHE PATENTANMELDUNG

(11) **EP 4 725 382 A1**
(43) Veröffentlichungstag der Anmeldung: **15.04.2026**
(21) Anmeldenummer: 25206976.0
(22) Anmeldetag: 06.10.2025
(51) Int. Cl.: A47L 9/28, A47L 11/40

(54) **REINIGUNGSSYSTEM UND VERFAHREN ZUM BETREIBEN EINES REINIGUNGSSYSTEMS**

(30) Priorität: 08.10.2024 DE 102024128930
(71) Anmelder: Alfred Kärcher SE & Co. KG, 71364 Winnenden (DE)
(72) Erfinder: Hammer, Daniel, 71364 Winnenden (DE); Roßkopf, Christian, 71364 Winnenden (DE)
(74) Vertreter: DTS Patent- und Rechtsanwälte PartmbB

(57) **Zusammenfassung**

Die Erfindung betrifft ein Reinigungssystem (100; 180), umfassend mindestens eine Datenverarbeitungseinheit (116, 138, 164), eine primäre Reinigungsvorrichtung (102) und mindestens eine sekundäre Reinigungsvorrichtung (104), die in einer Umgebung (134) der primären Reinigungsvorrichtung (102) positioniert ist, insbesondere in demselben Gebäude (108) wie die primäre Reinigungsvorrichtung (102), wobei die primäre Reinigungsvorrichtung (102) in einem Referenzkoordinatensystem (110) positioniert ist und eine Kommunikationseinheit (120, 168) aufweist oder eine Kommunikationseinheit (120, 168) an der primären Reinigungsvorrichtung (102) angeordnet oder mit dieser gekoppelt ist; wobei die mindestens eine sekundäre Reinigungsvorrichtung (104) ein Kommunikationsglied (150) umfasst, das ausgestaltet ist, eine Identifikationsinformation, die indikativ für die mindestens eine sekundäre Reinigungsvorrichtung (104) ist, per Funkverbindung an die Kommunikationseinheit (120, 168) zu übermitteln, wobei mittels der mindestens einen Datenverarbeitungseinheit (116, 138, 164) basierend auf einem Signal der Kommunikationseinheit (120, 168) eine Position der mindestens einen sekundären Reinigungsvorrichtung (104) relativ zur primären Reinigungsvorrichtung (102) ermittelbar ist, insbesondere in einem von der primären Reinigungsvorrichtung (102) definierten Hilfskoordinatensystem, und wobei mittels der mindestens einen Datenverarbeitungseinheit (116, 138, 164) die Position der primären Reinigungsvorrichtung (102) im Referenzkoordinatensystem (110) ermittelbar und die Position der mindestens einen sekundären Reinigungsvorrichtung (104) im Referenzkoordinatensystem (110) ermittelbar ist. Außerdem betrifft die Erfindung ein Verfahren zum Betreiben eines Reinigungssystems (100; 180).

## Beschreibung

Die vorliegende Erfindung betrifft ein Reinigungssystem mit einer Reinigungsvorrichtung und mindestens einer weiteren Reinigungsvorrichtung.

Darüber hinaus betrifft die vorliegende Erfindung ein Verfahren zum Betreiben eines Reinigungssystems.

Es sind Reinigungssysteme mit insbesondere hochwertigen oder komplexen Reinigungsvorrichtungen bekannt, die räumlich in einem Einsatzgebiet verteilt sind. Bei derartigen Reinigungssystemen können die Reinigungsvorrichtungen zum Zwecke der Einsatzplanung, beispielsweise auf der Grundlage anstehender Reinigungsaufgaben und zur Erfassung des technischen Zustands, sowie aus Sicherheitsgründen überwacht werden. Dabei ist es bekannt, die Position der Reinigungsvorrichtungen innerhalb des Einsatzgebietes zu ermitteln, insbesondere zeitabhängig. Beispielsweise erfolgt bei Einsätzen im Außenbereich eine GNSS-satellitenbasierte Ortung (z.B. durch GPS, GLONASS oder Galileo) zur Bestimmung der Position der Reinigungsvorrichtungen in einem absoluten Koordinatensystem, insbesondere einem geographischen Koordinatensystem (wobei es sich bei diesem beispielsweise um ein Weltkoordinatensystem handeln könnte). Darüber hinaus sind andersartige Verfahren zur Positionsbestimmung bekannt, zum Beispiel mittels Triangulation in einem Mobilfunknetz.

Die EP 3 078 214 A1 beschreibt ein Verfahren zur Überwachung eines Einsatzortes einer Flächenbearbeitungsvorrichtung, bei der ein Einsatzgebiet als "Geofence" definiert ist.

In der WO 2021/145536 A1 ist ein Reinigungsroboter und ein Verfahren zur Positionsbestimmungen eines Reinigungsroboters beschrieben.

Nachteilig bei der Positionsbestimmung von Reinigungsvorrichtungen kann es sein, dass eine Ortung in einem absoluten Koordinatensystem beispielsweise mittels GNSS oder vergleichbarer Technologie innerhalb von Gebäuden nur eingeschränkt oder ungenau möglich ist. Im Inneren von Gebäuden kann dies dadurch umgangen werden, dass Lokalisierungssysteme installiert werden, bei denen beispielsweise funkbasierte Landmarken, auch als Beacons, Satelliten oder Locators bezeichnet, eingesetzt werden. Dies erfordert jedoch einen nicht unbeträchtlichen Installationsaufwand. Zu ortende Reinigungsvorrichtungen müssen außerdem ebenfalls mit der erforderlichen Technik ausgestattet sein. Während hochwertige und komplexe Reinigungsvorrichtungen, wie beispielsweise Scheuersaugmaschinen, zum Zwecke eines Flottenmanagements eine Sensorik für Ortungszwecke üblicherweise zu ihrer Ausstattung zählen, gilt dies für konstruktiv einfachere Reinigungsvorrichtungen, wie zum Beispiel Sauggeräte, nicht. Derartige Reinigungsvorrichtungen werden von Reinigungsdienstleistern jedoch ebenso eingesetzt wie die zuvor genannten komplexeren Reinigungsvorrichtungen.

Aufgabe der vorliegenden Erfindung ist es, ein Reinigungssystem und ein Verfahren zum Betreiben eines Reinigungssystems bereitzustellen, bei dem eine Überwachung eingesetzter Reinigungsvorrichtungen konstruktiv einfach möglich ist.

Diese Aufgabe wird durch ein erfindungsgemäßes Reinigungssystem gelöst, umfassend mindestens eine Datenverarbeitungseinheit, eine primäre Reinigungsvorrichtung und mindestens eine sekundäre Reinigungsvorrichtung, die in einer Umgebung der primären Reinigungsvorrichtung positioniert ist, insbesondere in demselben Gebäude wie die primäre Reinigungsvorrichtung, wobei die primäre Reinigungsvorrichtung in einem Referenzkoordinatensystem positioniert ist und eine Kommunikationseinheit aufweist oder eine Kommunikationseinheit an der primären Reinigungsvorrichtung angeordnet oder mit dieser gekoppelt ist, wobei die mindestens eine sekundäre Reinigungsvorrichtung ein Kommunikationsglied umfasst, das ausgestaltet ist, eine Identifikationsinformation, die indikativ für die mindestens eine sekundäre Reinigungsvorrichtung ist, per Funkverbindung an die Kommunikationseinheit zu übermitteln, wobei mittels der mindestens einen Datenverarbeitungseinheit basierend auf einem Signal der Kommunikationseinheit eine Position der mindestens einen sekundären Reinigungsvorrichtung relativ zur primären Reinigungsvorrichtung ermittelbar ist, insbesondere in einem von der primären Reinigungsvorrichtung definierten Hilfskoordinatensystem, und wobei mittels der mindestens einen Datenverarbeitungseinheit die Position der primären Reinigungsvorrichtung im Referenzkoordinatensystem ermittelbar ist und die Position der mindestens einen sekundären Reinigungsvorrichtung im Referenzkoordinatensystem ermittelbar ist.

**In** die vorliegende Erfindung fließt die Überlegung mit ein, dass bei typischen Reinigungsaufgaben Reinigungsvorrichtungen häufig innerhalb einer gemeinsamen Umgebung positioniert sind, beispielsweise innerhalb desselben Gebäudes, wobei die Abstände der Reinigungsvorrichtungen voneinander nicht allzu groß sind. Beispielsweise betragen die Abstände einige Meter bis zu einigen Dutzend Metern. Des Weiteren fließt in die Erfindung die Überlegung mit ein, dass bei Reinigungsaufgaben unterschiedlich komplexe Reinigungsvorrichtungen eingesetzt werden. Insbesondere kann die primäre Reinigungsvorrichtung komplexer ausgestaltet sein als die mindestens eine sekundäre Reinigungsvorrichtung. Bei der primären Reinigungsvorrichtung kann es sich zum Beispiel um eine Scheuersaugmaschine handeln, die beispielsweise robotisch ausgestaltet sein kann. Sekundäre Reinigungsvorrichtungen können weniger komplex ausgestaltet sein, beispielsweise als handgeführte Sauggeräte oder Wischgeräte.

Gemäß der vorliegenden Erfindung kann die Position der mindestens einen sekundären Reinigungsvorrichtung in einem gewünschten Referenzkoordinatensystem bestimmt werden, in dem auch die Position der primären Reinigungsvorrichtung bekannt ist. Zu diesem Zweck stehen die Reinigungsvorrichtungen über eine Funkverbindung zwischen dem Kommunikationsglied und der Kommunikationseinheit miteinander in Verbindung. Dies gibt die Möglichkeit, die Relativposition der Reinigungsvorrichtungen zu bestimmen, beispielsweise in einem von der primären Reinigungsvorrichtung definierten Hilfskoordinatensystem. Auf dieser Grundlage kann die Position der mindestens einen sekundären Reinigungsvorrichtung im Referenzkoordinatensystem ermittelt werden, weil die Position der primären Reinigungsvorrichtung im Referenzkoordinatensystem bekannt ist. Es wird die primäre Reinigungsvorrichtung gewissermaßen als Schnittstelle oder "Zentrale" für die Ortung der mindestens einen sekundären Reinigungsvorrichtung eingesetzt, die selbst keine Ortungsfunktionalität aufweisen muss. Bei dem Reinigungssystem ist infolgedessen die Ortung der mindestens einen sekundären Reinigungsvorrichtung konstruktiv einfach möglich, denn zu diesem Zweck kann das Kommunikationsglied verhältnismäßig einfach ausgestaltet sein. Denkbar ist hierbei nicht nur eine Ausstattung mit dem Kommunikationsglied ab Werk, sondern es bietet sich vorzugsweise auch die Möglichkeit, im Feld vorhandene Reinigungsvorrichtungen mit einem preiswerten Kommunikationsglied nachzurüsten. Demgegenüber kann die primäre Reinigungsvorrichtung beispielsweise als komplexes Gerät mit einer Sensorik zur eigenständigen Positionsbestimmung ausgestattet sein. Dies ist gemäß der vorliegenden Erfindung jedoch nicht zwingend erforderlich.

Das Reinigungssystem eignet sich beispielsweise zur Nutzung in Gebäuden, in denen eine Einrichtung zur Lokalisierung insbesondere sekundärer Reinigungsvorrichtungen eingespart werden kann. Vorgesehen sein kann jedoch, dass eine Einrichtung zur Lokalisierung der primären Reinigungsvorrichtung installiert ist, insbesondere, wenn diese nicht anderweitig geortet werden kann. Dies gilt zum Beispiel für eine GNSS-basierte Navigation, die innerhalb von Gebäuden unmöglich oder unzureichend ist.

Ergänzend oder alternativ kann eine Positionsbestimmung der primären Reinigungsvorrichtung zum Beispiel durch Ortung in einem Funknetz erfolgen (hierbei können zum Beispiel Methoden der Triangulation zum Einsatz kommen), wobei es sich bei dem Funknetz um ein lokales und insbesondere gebäudeinternes Funknetz oder ein langreichweitiges Funknetz bis in Bereiche außerhalb der Gebäude handeln kann. Das langreichweitige Funknetz kann zum Beispiel ein Mobilfunknetz sein. Das langreichweitige Funknetz kann eine zelluläre oder eine flächenbasierte Architektur aufweisen.

Gemäß der vorliegenden Erfindung ist mindestens eine Datenverarbeitungseinheit vorgesehen. Mehrere Datenverarbeitungseinheiten können vorhanden sein. Die vorstehend beschriebenen Operationen können von verschiedenen Datenverarbeitungseinheiten vorgenommen werden. Dementsprechend kann obige Formulierung derart aufgefasst werden, dass beispielsweise "eine Datenverarbeitungseinheit der mindestens einen Datenverarbeitungseinheit" die Position der sekundären Reinigungsvorrichtung relativ zur primären Reinigungsvorrichtung, die Position im Referenzkoordinatensystem oder die Position der primären Reinigungsvorrichtung im Referenzkoordinatensystem ermittelt.

Das Referenzkoordinatensystem kann beispielsweise ein absolutes Koordinatensystem sein, insbesondere ein geographisches Koordinatensystem. Das geographische Koordinatensystem kann beispielsweise Angaben zur geografischen Breite, zur geografischen Länge und/oder zur Höhe über dem Meeresspiegel umfassen.

Das Referenzkoordinatensystem kann andererseits ein relatives Koordinatensystem sein. Denkbar ist beispielsweise ein Koordinatensystem eines Gebäudes, in dem die primäre Reinigungsvorrichtung und die mindestens eine sekundäre Reinigungsvorrichtung angeordnet sind. Denkbar ist zum Beispiel, dass bekannt ist, in welchem Gebäude sich die primäre Reinigungsvorrichtung befindet. Wünschenswert ist es, diese innerhalb des Gebäudes zu orten. Das Referenzkoordinatensystem kann beispielsweise ein(en) Grundriss des gesamten Gebäudes oder eines Teils des Gebäudes sein oder umfassen.

Es kann vorgesehen sein, dass die Position der primären und/oder der mindestens einen sekundären Reinigungsvorrichtung in zwei Dimensionen (2D) ermittelbar ist, insbesondere unabhängig von dem eingesetzten Koordinatensystem. Alternativ kann eine dreidimensionale Positionsbestimmung (3D) vorgesehen sein, bei der zusätzlich zu Koordinaten in einer Ebene (beispielsweise geographische Länge und Breite in einem Weltkoordinatensystem) eine Koordinate in der Höhe bestimmt wird.

Die primäre Reinigungsvorrichtung kann zum Beispiel eine Lokalisierungseinheit mit mindestens einem Sensor umfassen. Beispielsweise sind mindestens ein absoluter Positionssensor und/oder mindestens ein Umgebungssensor vorgesehen. Der absolute Positionssensor ist zum Beispiel ein GPS-Sensor oder gleichartiger Sensor für Ortungszwecke innerhalb eines andersartigen satellitenbasierten Ortungssystems. Der Umgebungssensor kann zum Beispiel ein Lidar sein, eine Kamera, ein Ultraschallsensor, ein Infrarotsensor oder ein Tastsensor. Denkbar ist insbesondere, dass bei einer robotischen Vorrichtung Umgebungssensoren für Ortungszwecke, die für eine Navigation innerhalb einer Karte der Umgebung vorhanden sind, eingesetzt werden.

Alternativ oder ergänzend kann vorzugsweise mindestens ein Sensor aus der Menge Magnetfeldsensor, Beschleunigungssensor, Odometriesensor (beispielsweise über Radencoder), Drehratensensor (Gyroskop) oder Kompasssensor vorgesehen sein. Dementsprechend sind bei der Reinigungsvorrichtung vorzugsweise Inertialsensoren vorgesehen. Über den Kompasssensor kann zum Beispiel die Orientierung der primären Reinigungsvorrichtung im Referenzkoordinatensystem bestimmt werden.

Alternativ oder ergänzend kann die Orientierung der primären Reinigungsvorrichtung beispielsweise ermittelt werden, indem mehrere Positionen als Funktion der Zeit in Kombination mit der aktuellen und ermittelbaren Bewegungsrichtung bestimmt werden. Eine Bewegungsrichtung kann sich zum Beispiel aus Daten von Inertialsensoren, insbesondere des Magnetfeldsensors, des Beschleunigungssensors und/oder des Drehratensensors, und/oder von Odometriesensoren ableiten lassen.

Alternativ oder ergänzend kann eine Positionsbestimmung für die primäre Reinigungsvorrichtung im Referenzkoordinatensystem beispielsweise mittels WLAN-Ortung oder andersartiger Funknetz-Ortung, insbesondere Mobilfunknetz-Ortung durchführbar sein. Eine Ortung ist beispielsweise über ein Wi-Fi-Netz möglich, bei dem es sich um eine besondere Ausprägung eines WLAN-Netzes handelt. Andere denkbare Funknetze sind zum Beispiel Bluetooth, UWB (Ultra-wide-band) oder basieren auf dem Standard IEEE 802.15.4., zum Beispiel bei einem WPAN-Netzwerk.

Auf eine Höhenbestimmung wurde bereits eingegangen. Zu diesem Zweck kann die primäre Reinigungsvorrichtung und/oder die mindestens eine sekundäre Reinigungsvorrichtung einen Höhensensor umfassen, beispielsweise ein Barometer. Die sekundäre Reinigungsvorrichtung könnte der primären Reinigungsvorrichtung einen diesbezüglichen Messwert über das Kommunikationsglied übermitteln.

Das Reinigungssystem kann bei einer bevorzugten Ausführungsform ein tragbares Zusatzgerät umfassen, bei dem es sich insbesondere um ein Smartphone handeln kann. Alternativ ist beispielsweise ein Tablet-Computer, eine Smart Watch oder ein head-mounted Device denkbar, zum Beispiel eine Datenbrille. Das tragbare Zusatzgerät ist günstigerweise mit der primären Reinigungsvorrichtung koppelbar. Denkbar ist beispielsweise die Nutzung einer Bluetooth-Verbindung, einer anderen WPAN-Verbindung oder einer WLAN-Verbindung.

Das tragbare Zusatzgerät stellt beispielsweise für die primäre Reinigungsvorrichtung mindestens eines der Folgenden bereit: eine Datenverarbeitungseinheit, eine Kommunikationseinheit, eine Lokalisierungseinheit mit mindestens einem absoluten Positionssensor und/oder mindestens einem Umgebungssensor, mindestens ein Sensor aus der Menge Magnetfeldsensor, Beschleunigungssensor, Odometriesensor, Drehratensensor, Kompasssensor, Höhensensor, eine Speichereinheit, eine Anzeigeeinheit. So ist beispielsweise denkbar, dass zum Empfang der Identifikationsinformation die Kommunikationseinheit des Zusatzgerätes eingesetzt wird und für die Positionsermittlung basierend auf dem Identifikationssignal die Datenverarbeitungseinheit des Zusatzgerätes eingesetzt wird. Auf obige Ausführungen zur primären Reinigungsvorrichtung wird an dieser Stelle verwiesen. Das Zusatzgerät kann zum Beispiel zur Positionsbestimmung und/oder Orientierungsbestimmung der primären Reinigungsvorrichtung im Referenzkoordinatensystem genutzt werden. Hierbei wird zum Beispiel davon ausgegangen, dass sich das Zusatzgerät an der Reinigungsvorrichtung oder in unmittelbarer Nähe der Reinigungsvorrichtung befindet.

Das Signal mit der Identifikationsinformation kann das positionsbestimmende Signal sein oder umfassen. Alternativ sind das Signal mit der Identifikationsinformation und das positionsbestimmende Signal zeitlich aufeinanderfolgende getrennte Signale. Es können bei einer Ausführungsform beispielsweise zwei oder mehrere getrennte Signale sein, die allerdings innerhalb eines gleichen Datenpaketes der verwendeten Funktechnologie vom Kommunikationsglied an die Kommunikationseinheit übertragen werden.

Das Kommunikationsglied kann beispielsweise lösbar an der oder in der mindestens einen sekundären Reinigungsvorrichtung angeordnet sein.

Alternativ kann vorgesehen sein, dass das Kommunikationsglied an oder in der mindestens einen sekundären Reinigungsvorrichtung fest verbaut ist.

Denkbar ist bei einer Ausführung der Erfindung, dass die Identifikationsinformation von der mindestens einen sekundären Reinigungsvorrichtung an die primäre Reinigungsvorrichtung abhängig vom Bestehen eines Signals in der mindestens einen sekundären Reinigungsvorrichtung übermittelbar ist. Das Signal ist insbesondere ein Sensorsignal eines Sensors der sekundären Reinigungsvorrichtung. Beispielsweise ist vorgesehen, dass die Identifikationsinformation nur übertragen wird, wenn die sekundäre Reinigungsvorrichtung eingeschaltet ist, tatsächlich in Verwendung ist oder bewegt wird.

Vorgesehen sein kann, dass die Identifikationsinformation vom Kommunikationsglied an die Kommunikationseinheit erst nach einer diesbezüglichen Aufforderungsinformation zum Bereitstellen der Identifikationsinformation übermittelt wird, wobei die Kommunikationseinheit die Aufforderungsinformation aussendet.

Alternativ kann vorgesehen sein, dass die Identifikationsinformation vom Kommunikationsglied spontan und insbesondere periodisch an die Kommunikationseinheit übermittelt wird.

Vorgesehen sein kann, dass die Kommunikationseinheit und das Kommunikationsglied miteinander für den Aufbau der Funkverbindung zunächst zu koppeln sind. Es werden beispielsweise Codes oder Tokens zum Aufbau der Funkverbindung ausgetauscht. Beispielsweise könnte die Kommunikationseinheit ein Signal im Sinne eines "Heartbeats" aussenden, um auf die sekundäre Reinigungsvorrichtung aufmerksam zu machen. Im Anschluss daran könnte eine Kopplung der Kommunikationseinheit mit dem Kommunikationsglied erfolgen.

Andererseits kann vorgesehen sein, dass eine derartige Kopplung nicht erforderlich ist.

Die Funkverbindung zwischen den Reinigungsvorrichtungen kann eine Punkt-zu-Punkt-Verbindung sein. Alternativ könnten die Reinigungsvorrichtungen über ein Netzwerk miteinander verbunden sein. Denkbar ist zum Beispiel ein Mesh-Netzwerk oder ein WLAN-Netzwerk. Allgemein ist denkbar, dass die Kommunikationseinheit und das Kommunikationsglied über einen gemeinsamen Schlüssel oder eine Erkennung einem gemeinsamen Verbund zugeordnet sind.

Die Identifikationsinformation kann beispielsweise mindestens eines der Folgenden in Bezug auf die mindestens eine sekundäre Reinigungsvorrichtung umfassen:
- eine Information betreffend den Typ;
- eine Information betreffend eine Seriennummer der sekundären Reinigungsvorrichtung und/oder eine Seriennummer des Kommunikationsgliedes. Denkbar ist in diesem Zusammenhang beispielsweise eine eineindeutige Kennzeichnung von Kommunikationsgliedern. Zu diesem Zweck kann zum Beispiel eine MAC-Adresse verwendet werden.

- Eine Information betreffend einen Arbeitszustand, beispielsweise, um zu ermitteln, ob die sekundäre Reinigungsvorrichtung im Betrieb ist. Ein Status und/oder eine bestehende Konfiguration der sekundären Reinigungsvorrichtung kann vorliegend als Arbeitszustand angesehen werden.
- Eine Information betreffend einen Arbeitsplan, beispielsweise, um zu ermitteln, ob die sekundäre Reinigungsvorrichtung für Reinigungsaufgaben eingeplant ist oder Reinigungsaufgaben bearbeitet.
- Eine Information betreffend eine oder mehrere verbrauchbare Komponente(n) zur Erfüllung einer Reinigungsaufgabe. Hierauf basierend kann beispielsweise eine Einsatzbereitschaft der sekundären Reinigungsvorrichtung festgestellt werden.

Die sekundäre Reinigungsvorrichtung kann autonom oder nicht-autonom ausgestaltet sein.

Das Kommunikationsglied und die Kommunikationseinheit sind beispielsweise zum Eingehen einer Bluetooth-Verbindung und/oder zum Eingehen einer UWB (Ultra-Wide-Band)-Funkverbindung ausgestaltet. In der Praxis kann sich zum Beispiel Bluetooth LE (Low Energy) als vorteilhaft erweisen, um einen Energieverbrauch auf Seiten der sekundären Reinigungsvorrichtung möglichst gering zu halten. Vorteilhaft kann die Ausgestaltung zum Aufbau einer WPAN oder WLAN-Funkverbindung sein.

Günstig kann es sein, wenn von der mindestens einen Datenverarbeitungseinheit ergänzend zur Position eine Orientierung der mindestens einen primären Reinigungsvorrichtung - und damit insgesamt eine sogenannte Pose - im Referenzkoordinatensystem ermittelbar ist. Auf diese Weise kann eine möglichst umfassende Information über Position der sekundären Reinigungsvorrichtung bestimmt werden. Beispielsweise lässt sich anhand der Position der primären Reinigungsvorrichtung beispielsweise ermitteln, innerhalb welcher Reichweite der Umgebung sich die mindestens eine sekundäre Reinigungsvorrichtung befindet. Durch die ergänzende Feststellung der Orientierung der primären Reinigungsvorrichtung kann die Position der sekundären Reinigungsvorrichtung im Referenzkoordinatensystem viel genauer bestimmt werden.

Wie bereits erwähnt kann die primäre Reinigungsvorrichtung zur Ermittlung einer Orientierung günstigerweise einen Kompasssensor aufweisen.

Es kann optional vorgesehen sein, dass von der mindestens einen Datenverarbeitungseinheit ergänzend zur Position eine Orientierung der mindestens einen sekundären Reinigungsvorrichtung relativ zur primären Reinigungsvorrichtung ermittelbar ist.

Vorgesehen sein kann, dass von der mindestens einen Datenverarbeitungseinheit eine Position der mindestens einen sekundären Reinigungsvorrichtung als Funktion der Zeit ermittelbar ist. Dies gibt insbesondere die Möglichkeit, eine Bewegung der sekundären Reinigungsvorrichtung in der Umgebung festzustellen. Dies ist zum Beispiel vorteilhaft im Hinblick auf eine Bestimmung eines von der mindestens einen sekundären Reinigungsvorrichtung zurückgelegten Weges, speziell zur Reinigungskontrolle. Beispielsweise kann ermittelt werden, wo und wie lange die sekundäre Reinigungsvorrichtung sich an einem bestimmten Ort oder innerhalb eines Raumes befunden hat. Dies erlaubt es, Reinigungsaufgaben zu überwachen, sowohl bei autonomer Reinigungsvorrichtung als auch bei einer handgeführten sekundären Reinigungsvorrichtung.

Eine Entfernung zwischen dem Kommunikationsglied und der Kommunikationseinheit kann beispielsweise über eine Signalstärke der Funkverbindung beim Übermitteln der Identifikationsinformation bestimmt werden.

Alternativ oder ergänzend kann sich eine genaue Entfernungsmessung insbesondere mittels einer Laufzeitmessung eines Signals zwischen dem Kommunikationsglied und der Kommunikationseinheit und/oder durch Bestimmung einer Phasenveränderung eines Signals ergeben.

Ein Winkel zwischen der primären und der mindestens einen sekundären Reinigungsvorrichtung zum Ermitteln der Position der Letzteren kann zum Beispiel über eine Bestimmung der Richtung ermittelt werden, aus der die Identifikationsinformation empfangen wird. Aus der Entfernung und dem Winkel kann die Position der sekundären Reinigungsvorrichtung zur primären Reinigungsvorrichtung berechnet werden.

Vorgesehen sein kann, dass die Position der mindestens einen sekundären Reinigungsvorrichtung genauer bestimmt wird, indem mehrere Messungen der Entfernung und/oder des Winkels vorgenommen werden.

Über den Winkel, der sich aus einem horizontalen Vektor und einem vertikalen Vektor zusammensetzen könnte, könnte eine Höheninformation errechnet werden.

Vorgesehen sein kann, dass eine Datenverarbeitungseinheit der primären Reinigungsvorrichtung oder eine Datenverarbeitungseinheit eines mit der primären Reinigungsvorrichtung gekoppelten Zusatzgerätes zur Ermittlung der Position der mindestens einen sekundären Reinigungsvorrichtung relativ zur primären Reinigungsvorrichtung ausgebildet und eingerichtet ist.

Alternativ oder ergänzend kann vorgesehen sein, dass eine räumlich entfernt von der primären Reinigungsvorrichtung angeordnete Datenverarbeitungseinheit zur Ermittlung der Position der mindestens einen sekundären Reinigungsvorrichtung relativ zur primären Reinigungsvorrichtung ausgebildet und eingerichtet ist.

Die räumlich entfernt angeordnete Datenverarbeitungseinheit kann zum Beispiel einen oder mehrere Computer umfassen oder durch einen oder mehrere Computer gebildet sein. Denkbar ist eine Ausgestaltung als Cloud.

Vorgesehen sein kann alternativ oder ergänzend, dass eine Datenverarbeitungseinheit der primären Reinigungsvorrichtung oder eine Datenverarbeitungseinheit eines mit der primären Reinigungsvorrichtung gekoppelten Zusatzgerätes zur Ermittlung der Position der primären Reinigungsvorrichtung im Referenzkoordinatensystem ausgebildet und eingerichtet ist und/ oder zur Ermittlung der Position der mindestens einen sekundären Reinigungsvorrichtung im Referenzkoordinatensystem ausgebildet und eingerichtet ist. Entsprechende Positionsinformationen können von der primären Reinigungsvorrichtung dann zum Beispiel an eine übergeordnete Zentrale übermittelt werden.

Alternativ oder ergänzend ist denkbar, dass eine räumlich entfernt von der primären Reinigungsvorrichtung angeordnete Datenverarbeitungseinheit zur Ermittlung der Position der primären Reinigungsvorrichtung im Referenzkoordinatensystem ausgebildet und eingerichtet ist und/oder zur Ermittlung der Position der mindestens einen sekundären Reinigungsvorrichtung im Referenzkoordinatensystem ausgebildet und eingerichtet ist, wobei die primäre Reinigungsvorrichtung mit der räumlich entfernt angeordneten Datenverarbeitungseinheit über eine Kommunikationsverbindung verbunden oder verbindbar ist. Diese Ausführungsform ist zum Beispiel denkbar, wenn die primäre Reinigungsvorrichtung ihre eigene Position im Referenzkoordinatensystem nicht bestimmen kann, aber zum Beispiel die Position der sekundären Reinigungsvorrichtung relativ zur primären Reinigungsvorrichtung. Die Position der primären Reinigungsvorrichtung im Referenzkoordinatensystem und in entsprechender Weise der sekundären Reinigungsvorrichtung im Referenzkoordinatensystem kann dann zum Beispiel von der räumlich entfernt angeordneten Datenverarbeitungseinheit durchgeführt werden.

Vorgesehen sein kann, dass das Reinigungssystem eine räumlich entfernt von der primären Reinigungsvorrichtung angeordnete Datenverarbeitungseinheit umfasst, an die die Position der primären Reinigungsvorrichtung im Referenzkoordinatensystem und/oder der mindestens einen sekundären Reinigungsvorrichtung im Referenzkoordinatensystem übermittelbar ist. Hierbei erfolgt die Bestimmung obiger Position beispielsweise von der Datenverarbeitungseinheit der primären Reinigungsvorrichtung oder des Zusatzgerätes. Die Übermittlung der Positionsinformation kann zum Beispiel für Auswertungszwecke über die Reinigungsvorrichtungen dienen.

Es kann insbesondere vorgesehen sein, dass die Datenverarbeitungseinheit des Zusatzgerätes die relative Position und die absolute Position der mindestens einen sekundären Reinigungsvorrichtung im Referenzkoordinatensystem, sowie die absolute Position der primären Reinigungsvorrichtung im Referenzkoordinatensystem bestimmt und an die räumlich entfernt von der primären Reinigungsvorrichtung und dem Zusatzgerät angeordnete Datenverarbeitungseinheit übermittelt.

Die Position der mindestens einen sekundären Reinigungsvorrichtung relativ zur primären Reinigungsvorrichtung kann zum Beispiel mittels Methoden der Triangulation und/oder Trilateration ermittelbar sein. Derartige Verfahren sind dem Fachmann bekannt. Wie bereits erwähnt kommt alternativ vorzugsweise eine Bestimmung der Position der sekundären Reinigungsvorrichtung mittels einer Entfernungsmessung und einer Winkelmessung zum Einsatz. Beide Verfahren zur Positionsermittlung, wie in diesem Absatz beschrieben, können auch kumulativ vorgenommen werden.

Günstig kann es sein, wenn das Reinigungssystem mindestens eine weitere primäre Reinigungsvorrichtung und eine weitere Kommunikationseinheit in oder an dieser (beispielsweise über ein weiteres Zusatzgerät) umfasst und wenn die Identifikationsinformation an diese weitere Kommunikationseinheit übermittelbar ist, wobei die Position der mindestens einen sekundären Reinigungsvorrichtung im Referenzkoordinatensystem von der mindestens einen Datenverarbeitungseinheit unter Berücksichtigung der jeweiligen Identifikationsinformation ermittelbar ist, die an die primäre Reinigungsvorrichtung und die weitere primäre Reinigungsvorrichtung übermittelt wird. Dies ermöglicht es, die Position der sekundären Reinigungsvorrichtung genauer zu bestimmen, indem zwei primäre Reinigungsvorrichtungen eingesetzt werden. Es versteht sich, dass die Identifikationsinformation, die von der sekundären Reinigungsvorrichtung an die jeweilige primäre Reinigungsvorrichtung gesendet wird, gleich ist.

Beispielsweise kann hierbei folgendermaßen vorgegangen werden. Die absolute Position der sekundären Reinigungsvorrichtung im Referenzkoordinatensystem wird mittels der Datenverarbeitungseinheit der primären Reinigungsvorrichtung berechnet. Bei der zweiten primären Reinigungsvorrichtung wird eine räumlich entfernt angeordnete Datenverarbeitungseinheit (beispielsweise in der Cloud genutzt), die die beiden berechneten Positionen der sekundären Reinigungsvorrichtung zusammenbringt, indem das plausibelste Ergebnis bestimmt wird. Alternativ könnten sich die Datenverarbeitungseinheiten der beiden primären Reinigungsvorrichtungen ohne Zutun eines Benutzers untereinander auf eine gemeinsame Position einigen. Alternativ könnte die Berechnung der absoluten Position der sekundären Reinigungsvorrichtung im Referenzkoordinatensystem jeweils in der räumlich entfernt angeordneten Datenverarbeitungseinheit erfolgen, die die beiden berechneten Positionen zusammenbringt, indem das plausibelste Ergebnis bestimmt wird.

Vorgesehen sein kann, dass sich bei einer Mehrzahl von primären Reinigungsvorrichtungen die ermittelten Positionen der sekundären Reinigungsvorrichtung voneinander unterscheiden. Für die endgültige Ermittlung der Position im Referenzkoordinatensystem kann von der Datenverarbeitungseinheit vorzugsweise ein Algorithmus eingesetzt werden. Dabei kann zum Beispiel eine Mittelung über unterschiedliche Positionen und eine Mittelung über die Zeit durchgeführt werden, um eine geglättete Position als Funktion der Zeit zu berechnen.

Das Reinigungssystem kann bei einer beispielhaften Ausführungsform mindestens eine Speichereinheit umfassen, in der eine Umgebungskarte der Umgebung gespeichert ist, wobei eine Position und/oder Orientierung der primären Reinigungsvorrichtung und/oder der mindestens einen sekundären Reinigungsvorrichtung in der Umgebungskarte insbesondere zeitabhängig speicherbar ist.

Die Umgebungskarte (nachfolgend auch kurz: Karte) kann beispielsweise das Referenzkoordinatensystem bilden oder das Hilfskoordinatensystem. Die Karte kann für Visualisierungszwecke einem Benutzer beispielsweise an mindestens einer Anzeigeeinheit des Reinigungssystems darstellbar sein und vorzugsweise über die Anzeigeeinheit (beispielsweise einen Touchscreen) bearbeitbar sein. Zur Navigation in der Umgebung anhand der Karte umfasst die primäre Reinigungsvorrichtung günstigerweise die vorstehend genannte Lokalisierungseinheit mit einem absolutem Positionssensor, mindestens einem Umgebungssensor und/oder einen der weiteren genannten Sensoren. Auch eine funknetzbasierte Navigation ist denkbar.

Bei einer Ausführungsform der Erfindung kann eine Karte zum Einsatz kommen, die jedoch nicht gespeichert wird oder speicherbar ist. Beispielsweise können bei einer funknetzbasierten Navigation wie etwa bei Mobilfunkortung aus den gemessenen Werten direkt geographische Koordinaten errechnet werden, die in einem Kartendienst (z.B. Google Maps) angezeigt werden.

Bei robotischen Reinigungsvorrichtungen können beispielsweise WLAN-Ortung und/oder UWB-Ortung in Kombination mit relativen Karten eingesetzt werden, die in einer Speichereinheit speicherbar sind.

Zumindest eines der folgenden kann vorgesehen sein:
- Die primäre Reinigungsvorrichtung umfasst eine Speichereinheit;
- eine Speichereinheit ist räumlich entfernt von der primären Reinigungsvorrichtung angeordnet, beispielsweise als Bestandteil der Datenverarbeitungseinheit als Cloud oder in der Cloud;
- ein mit der primären Reinigungsvorrichtung gekoppeltes Zusatzgerät umfasst eine Speichereinheit.

Die primäre Reinigungsvorrichtung kann zum Beispiel autonom und/oder benutzergeführt an zwei oder mehr voneinander unterschiedliche Ankerpositionen in der Umgebung verfahrbar sein, wobei in der Umgebungskarte eine jeweilige Ankerposition speicherbar ist. Eine Orientierung und eine Skalierung der Umgebungskarte relativ zu einer absoluten Karte (beispielsweise einer Landkarte in einem geographischen Koordinatensystem) ist günstigerweise von der mindestens einen Datenverarbeitungseinheit durchführbar, indem den Ankerpositionen Referenzpositionen der primären Reinigungsvorrichtung im Referenzkoordinatensystem zugeordnet werden, wobei das Referenzkoordinatensystem insbesondere ein geographisches Koordinatensystem ist.

Alternativ oder ergänzend kann die primäre Reinigungsvorrichtung zum Beispiel an zwei oder mehr voneinander unterschiedliche Ankerpositionen in der Umgebung verfahrbar sein und in einer absoluten Karte des Referenzkoordinatensystems eine jeweilige Ankerposition speicherbar sein, wobei eine Orientierung und eine Skalierung der absoluten Karte relativ zur Umgebungskarte von der mindestens einen Datenverarbeitungseinheit durchführbar ist, indem den Ankerpositionen Positionen der primären Reinigungsvorrichtung in der Umgebungskarte zugeordnet werden, wobei das Referenzkoordinatensystem insbesondere ein geographisches Koordinatensystem ist.

**In** den beiden vorstehend genannten Fällen können die Umgebungskarte und die absolute Karte des Referenzkoordinatensystems ineinander transformiert werden, von der Umgebungskarte in die absolute Karte oder umgekehrt. Die Ankerpositionen können in der Umgebungskarte und/oder in der absoluten Karte speicherbar sein.

Die absolute Karte kann eine Karte eines geographisches Koordinatensystems sein (z.B. eine Landkarte), muss dies aber nicht. Denkbar ist beispielsweise die Nutzung eines Grundrisses eines Gebäudes oder eines Teiles des Gebäudes als absolute Karte.

Auch eine manuelle Orientierung und Skalierung zwischen der absoluten Karte und der Umgebungskarte ohne Ankerpositionen ist vorzugsweise durchführbar. Beispielsweise kann ein Benutzer die Umgebungskarte manuell in das Referenzkoordinatensystem und damit die absolute Karte überführen. Zu diesem Zweck wird zum Beispiel eine Eingabeeinheit wie etwa ein Touchscreen der primären Reinigungsvorrichtung und/oder des Zusatzgerätes genutzt.

Vorzugsweise können die zwei oder mehr Ankerpositionen mittels des Zusatzgerätes und/oder mittels einen GNSS-Positionssensors in der primären Reinigungsvorrichtung und/oder des Zusatzgerätes vorgebbar sein.

Alternativ oder ergänzend können die Ankerpositionen beispielsweise durch einen Benutzer an einer Eingabeeinheit der primären Reinigungsvorrichtung und/oder des Zusatzgerätes manuell per Drag and Drop vorgebbar oder übertragbar sein. Hierbei besteht zum Beispiel die Möglichkeit, Ankerpositionen aus einer Umgebungskarte in eine absolute Karte zu ziehen.

Alternativ kann beispielsweise manuell durch einen Benutzer eine Zuordnung geografischer Koordinaten zu Koordinaten in dem absoluten Referenzkoordinatensystem vorgenommen werden.

Die primäre Reinigungsvorrichtung kann zur Ermittlung einer Orientierung günstigerweise einen Kompasssensor aufweisen.

Das Reinigungssystem kann mindestens eine Anzeigeeinheit umfassen zum Darstellen einer absoluten Karte und/oder einer Karte der Umgebung der primären Reinigungsvorrichtung, wobei die Position der mindestens einen sekundären Reinigungsvorrichtung und/oder der primären Reinigungsvorrichtung in der absoluten Karte und/oder der Umgebungskarte darstellbar ist. Über die jeweilige Karte können die Positionen der Reinigungsvorrichtungen von einem Benutzer intuitiv erfasst werden.

Vorgesehen sein kann beispielsweise, dass die primäre Reinigungsvorrichtung eine Anzeigeeinheit umfasst, beispielsweise an einer Bedieneinheit.

Eine Anzeigeeinheit kann räumlich entfernt von der primären Reinigungsvorrichtung angeordnet sein und ist beispielsweise von der räumlich entfernt angeordneten Datenverarbeitungseinheit ansteuerbar.

Alternativ oder ergänzend kann ein mit der primären Reinigungsvorrichtung gekoppeltes Zusatzgerät eine Anzeigeeinheit umfassen.

Von der mindestens einen Datenverarbeitungseinheit kann günstigerweise ein Bericht über die Position der mindestens einen sekundären Reinigungsvorrichtung und/oder der primären Reinigungsvorrichtung erstellbar sein, insbesondere über die Position(en) als Funktion der Zeit. Über den Bericht, der physisch (z.B. in Papierform) und/oder nicht-physisch (in elektronischer Form) erstellt werden kann, kann die Information über die Nutzung der Reinigungsvorrichtungen beispielsweise für Zwecke der Reinigungskontrolle zusammengefasst werden.

Die primäre Reinigungsvorrichtung und/oder die mindestens eine sekundäre Reinigungsvorrichtung kann zum Beispiel ein Flächenreinigungsgerät sein und/oder mobil ausgestaltet sein.

Die primäre Reinigungsvorrichtung ist beispielsweise eine Bodenreinigungsvorrichtung, insbesondere eine Scheuersaugmaschine oder eine Kehrmaschine.

Die primäre Reinigungsvorrichtung kann zum Beispiel ein Reinigungswagen sein, der zur Aufnahme von handgeführten Reinigungsutensilien ausgestaltet sein kann. Bei diesen Reinigungsutensilien kann es sich zum Beispiel um sekundäre Reinigungsvorrichtungen handeln.

Die primäre Reinigungsvorrichtung kann handgeführt und/oder selbstlenkend und selbstfahrend für eine autonome Reinigung ausgestaltet sein.

Die mindestens eine sekundäre Reinigungsvorrichtung umfasst oder bildet beispielsweise ein Sauggerät, ein Wischgerät, ein Sprühextraktionsgerät, ein Dampfreinigungsgerät, ein Hartflächenreinigungsgerät, ein Kehrgerät, ein Hochdruckreinigungsgerät oder ein manuell geführtes Reinigungsutensil (Tuch, Besen, Wischmopp, Abzieher...). Andersartige Ausgestaltungen der sekundären Reinigungsvorrichtung sind denkbar.

Benutzergeführte Reinigungsvorrichtungen können als Nachlauf- (Walk-behind), als Aufsitz- oder Aufsteh- (Ride-on)-Vorrichtungen ausgestaltet sein.

Wie vorstehend erwähnt, betrifft die vorliegende Erfindung auch ein Verfahren.

Ein erfindungsgemäßes Verfahren zum Betreiben eines Reinigungssystems, insbesondere der vorstehend beschriebenen Art, umfasst:
- Ermitteln einer Position einer primären Reinigungsvorrichtung in einem Referenzkoordinatensystem;
- Übermitteln mindestens einer Identifikationsinformation, die indikativ für mindestens eine sekundäre Reinigungsvorrichtung ist, per Funkverbindung. Hierbei kann die Identifikationsinformation beispielsweise an die Kommunikationseinheit der primären Reinigungsvorrichtung oder an die Kommunikationseinheit eines an dieser angeordneten Zusatzgerätes übermittelt werden;
- Ermitteln einer Position der mindestens einen sekundären Reinigungsvorrichtung relativ zur primären Reinigungsvorrichtung; und
- Ermitteln einer Position der mindestens einen sekundären Reinigungsvorrichtung im Referenzkoordinatensystem.

Die Reihenfolge obiger Verfahrensschritte kann verschieden sein. Beispielsweise kann die Position der primären Reinigungsvorrichtung im Referenzkoordinatensystem nach der Ermittlung der Relativposition der sekundären Reinigungsvorrichtung zur primären Reinigungsvorrichtung durchgeführt werden.

Die Wirkungen und Vorteile, die unter Ausübung des Verfahrens erzielt werden, wurden bereits im Zusammenhang mit der Erläuterung des Reinigungssystems erzielt. Vorteilhafte Ausführungsbeispiele des Verfahrens ergeben sich durch vorteilhafte Ausführungsformen der erfindungsgemäßen Reinigungsvorrichtung. Auf die voranstehenden Ausführungen wird verwiesen.

Die nachfolgende Beschreibung bevorzugter Ausführungsformen der Erfindung dient im Zusammenhang mit der Zeichnung der näheren Erläuterung der Erfindung. Mit den beschriebenen Reinigungssystemen kann das erfindungsgemäße Verfahren ausgeübt werden. Es zeigen:
- Figur 1:: eine schematische Darstellung des erfindungsgemäßen Reinigungssystems in bevorzugter Ausführungsform;
- Figur 2:: eine schematische Darstellung einer Umgebungskarte einer Umgebung einer Reinigungsvorrichtung; und
- Figur 3:: eine schematische Darstellung einer weiteren bevorzugten Ausführungsform des erfindungsgemäßen Reinigungssystems.

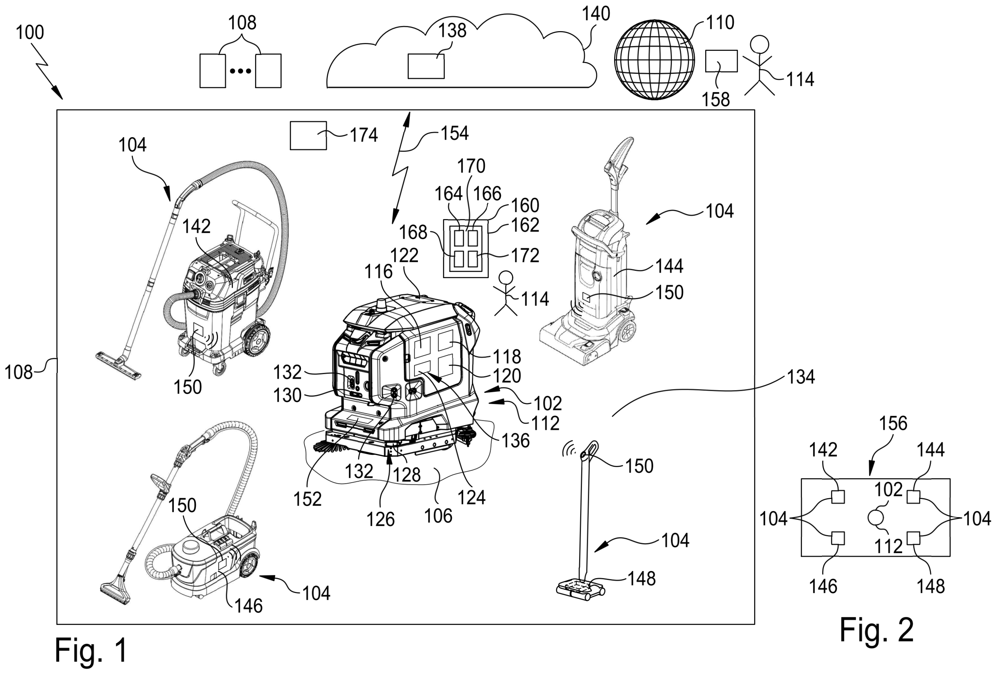

Figur 1 der Zeichnung zeigt schematisch eine insgesamt mit dem Bezugszeichen 100 belegte vorteilhafte Ausführungsform des erfindungsgemäßen Reinigungssystems. Das Reinigungssystem 100 ist im vorliegenden Ausführungsbeispiel ein Bodenreinigungssystem und umfasst eine Mehrzahl von Reinigungsvorrichtungen 102, 104, die jeweils zum Reinigen einer Bodenfläche 106 ausgestaltet sind. Aus den vorangegangenen Ausführungen ergibt sich, dass die Erfindung weder auf eine Bodenreinigung beschränkt ist noch auf die nachfolgend beispielhaft erläuterten Reinigungsvorrichtungen.

Im vorliegenden Beispiel sind die Reinigungsvorrichtungen 102, 104 in einem Gebäude 108 angeordnet und werden beispielsweise von einem Reinigungsdienstleister zur Reinigung des Gebäudes 108 eingesetzt. Der Reinigungsdienstleister besitzt beispielsweise weitere Reinigungsvorrichtungen 102, 104, die sich in weiteren Gebäuden 108 befinden, welche in der Zeichnung nur schematisch dargestellt sind.

Wünschenswert ist es, die Position der Reinigungsvorrichtungen 102, 104 zu kennen und deren Einsatz zu überwachen. Dabei kann es insbesondere wünschenswert sein, eine absolute Positionsinformation der Reinigungsvorrichtungen 102, 104 in einem Referenzkoordinatensystem 110 zu kennen, bei dem es sich vorliegend um ein geographisches Koordinatensystem handelt.

Im vorliegenden Beispiel sind die Reinigungsvorrichtungen 102, 104 unterschiedlich beschaffen. Bei der Reinigungsvorrichtung 102 handelt es sich um eine primäre Reinigungsvorrichtung im Sinne der Erfindung, die ausgestaltet ist als Scheuersaugmaschine 112. Die Scheuersaugmaschine 112 ist im vorliegenden Fall robotisch ausgestaltet und ermöglicht eine autonome Reinigung der Bodenfläche 106. Ergänzend oder alternativ kann die Scheuersaugmaschine 112 von einem Benutzer 114 handgeführt sein.

Die Scheuersaugmaschine 112 weist insbesondere eine Datenverarbeitungseinheit 116, eine Speichereinheit 118 und eine Kommunikationseinheit 120 auf. Eine Anzeigeeinheit 122 kann vorgesehen sein.

Darüber hinaus umfasst die Scheuersaugmaschine 112 vorliegend vorzugsweise mindestens einen absoluten Positionssensor 124 und einen oder mehrere Umgebungssensoren 126.

Mittels des absoluten Positionssensors 124, beispielsweise ein GNSS (insbesondere GPS)-Sensor oder ein Sensor zur Ortung innerhalb eines andersartigen Satellitennavigationssystems, kann die Position der Scheuersaugmaschine 112 im Referenzkoordinatensystem 110 bestimmt werden.

Die Umgebungssensoren 126, die beispielsweise ein Lidar 128, eine Kamera 130 und Ultraschallsensoren 132 umfassen, erlauben eine Navigation der Scheuersaugmaschine 112 innerhalb einer Umgebung 134. Die Umgebungssensoren 126 und der Positionssensor 124 sind Bestandteil einer Lokalisierungseinheit 136 der Scheuersaugmaschine 112.

Das Bezugszeichen 152 steht stellvertretend für mindestens einen weiteren Sensor, den die primäre Reinigungsvorrichtung 102 vorzugsweise umfasst, insbesondere aus der Menge Magnetfeldsensor, Beschleunigungssensor, Odometrie, Drehratensensor, Kompasssensor, Höhensensor (z.B. Barometer).

Die Umgebungssensoren 126 und der mindestens eine Sensor 152 erlauben zum Beispiel eine Navigation und Positionsbestimmung innerhalb der Umgebung unter Nutzung einer Umgebungskarte. Die Umgebungskarte kann in Größe und Skalierung mit einer absoluten Karte des Referenzkoordinatensystems 110 in Übereinstimmung gebracht werden ("gematcht"). Zu diesem Zweck können zwei oder mehr Ankerpositionen, auf die bereits eingegangen wurde, genutzt werden, um eine Position der Reinigungsvorrichtung 102 im Referenzkoordinatensystem zu bestimmen. Dies wird nachfolgend noch erläutert.

Es ergibt sich, dass der Positionssensor 124 optional ist, da alternativ Ankerpositionen genutzt werden können. Alternativ oder ergänzend kann zur absoluten Positionsbestimmung beispielsweise eine Funknetz-Ortung wie z.B. Mobilfunk, WLAN und/oder UWB verwendet.

Alternativ oder ergänzend kann zum Beispiel eine Indoorlokalisierungstechnologie zum Einsatz kommen. Hierbei ist es bevorzugt, wenn eine Umgebungskarte erstellbar ist. Diese kann optional in eine Karte eines Grundrisses eines des Gebäudes 108 überführt werden. Die Umgebungskarte und/oder die Grundriss-Karte kann vorzugsweise erforderlichenfalls über Ankerpositionen oder manuell auf eine absolute Karte übertragen werden.

Beispielsweise ist eine Datenverarbeitungseinheit 138 unter der Verwaltung des Reinigungsdienstleisters oder eines Herstellers der Reinigungsvorrichtungen 102, 104. Die Datenverarbeitungseinheit 138 kann zum Beispiel über eine Cloud 140 gebildet oder bereitgestellt werden. Denkbar ist, dass der Reinigungsdienstleister zur Positionskontrolle der Reinigungsvorrichtung 102, 104 über die Datenverarbeitungseinheit 138 die Scheuersaugmaschine 112 sowie in den weiteren Gebäuden korrespondierende primäre Reinigungsvorrichtungen 102 als Schnittstellen für weitere Reinigungsvorrichtungen 104 einsetzt.

Diese Reinigungsvorrichtungen 104 sind sekundäre Reinigungsvorrichtungen im Sinne der vorliegenden Erfindung, die sich in der Umgebung 134 der Scheuersaugmaschine 112 befinden. Die Umgebung deckt insbesondere einen Nahbereich der Scheuersaugmaschine 112 ab, beispielsweise wenige Meter bis hin zu einigen Dutzend Metern. Insbesondere sind die Reinigungsvorrichtungen 104 hierbei im Gebäude 108 angeordnet.

Im vorliegenden nicht-einschränkenden Beispiel sind als sekundäre Reinigungsvorrichtungen 104 beispielsweise ein Sauggerät 142, ein Hartflächenreinigungsgerät 144, ein Sprühextraktionsgerät 146 und ein Wischgerät 148 vorgesehen. Das Hartflächenreinigungsgerät 144 ist eine konstruktiv einfache Ausgestaltung einer handgeführten Scheuersaugmaschine.

Vorgesehen sein kann, dass die sekundären Reinigungsvorrichtungen 104 vom selben Typ oder identisch sind oder, wie im vorliegenden Beispiel, unterschiedlich ausgestaltet sind.

Die Reinigungsvorrichtungen 104 sind konstruktiv einfacher ausgestaltet als die komplexe Scheuersaugmaschine 112. Anders als diese umfassen sie keine Lokalisierungseinheit 136 für die eigenständige Navigation innerhalb der Umgebung 134. Wie die Reinigungsvorrichtung 104 dennoch geortet und ihre Position im Referenzkoordinatensystem 110 bestimmt werden kann, wird nachfolgend erläutert.

Die jeweilige sekundäre Reinigungsvorrichtung umfasst ein Kommunikationsglied 150, das kostengünstig hergestellt werden kann, beispielsweise als Funkmodul ausgestaltet ist und zur Ausbildung einer Funkverbindung mit der Kommunikationseinheit 120 ausgebildet ist. Die Kommunikationsverbindung ist beispielsweise eine Bluetooth-Verbindung, insbesondere auf der Grundlage von Bluetooth LE (Low Energy). Alternativ kann die Verbindung beispielsweise eine UWB (Ultra-Wide-Band)-Verbindung sein. Auch der Einsatz einer andersartigen WPAN-Technologie und/oder einer WLAN-Funkverbindung ist denkbar.

Das Kommunikationsglied 150 kann in der Reinigungsvorrichtung 104 fest verbaut sein, beispielsweise ab Werk. Alternativ kann das Kommunikationsglied 150 lösbar mit der Reinigungsvorrichtung 104 verbindbar sein oder verbunden sein. Dies ermöglicht zum Beispiel den Einsatz von Kommunikationsgliedern 150 zum Nachrüsten vorhandener Reinigungsvorrichtungen 104.

Vom jeweiligen Kommunikationsglied 150 kann an die Kommunikationseinheit 120 eine Identifikationsinformation übertragen werden, die indikativ für die Reinigungsvorrichtung 104 ist. Denkbar ist beispielsweise, eine Seriennummer des Kommunikationsgliedes 150 übertragen wird.

Denkbar ist ferner, dass der Typ der Reinigungsvorrichtung 104, deren Seriennummer und weitere Informationen übertragen werden. Die Seriennummer kann beispielsweise eine MAC-Adresse des Kommunikationsgliedes 150 sein. Übertragbare Informationen umfassen beispielsweise einen Arbeitszustand, einen Arbeitsplan und/oder Informationen über verbrauchbare Komponenten der Reinigungsvorrichtungen 104. Auf dieser Grundlage ist es zum Beispiel möglich, Einsatzzeiten der Reinigungsvorrichtungen 104 zu ermitteln und für Planungszwecke zu verwenden. Hierauf wurde bereits eingegangen.

Die Identifikationsinformationen können von den Reinigungsvorrichtungen spontan übertragen werden, insbesondere periodisch. Alternativ kann vorgesehen sein, dass die Identifikationsinformationen erst nach einer diesbezüglichen Aufforderungsinformation seitens der Kommunikationseinheit 120 übertragen werden.

Denkbar ist, dass die Reinigungsvorrichtung 104 die Identifikationsinformationen abhängig vom Bestehen eines Signals an die Kommunikationseinheit 120 übermittelt. So können Identifikationsinformationen zum Beispiel nur übertragen werden, wenn die sekundäre Reinigungsvorrichtung 104 eingeschaltet ist, in Verwendung ist oder bewegt wird.

Anhand der übermittelten Identifikationsinformation kann von der Datenverarbeitungseinheit 116 und/oder 138 eine Position der Reinigungsvorrichtung 104 relativ zur Scheuersaugmaschine 112 festgestellt werden. Die Ermittlung erfolgt dabei beispielsweise innerhalb eines Hilfskoordinatensystems, das von der Scheuersaugmaschine 112 definiert wird.

Die Bestimmung der Position erfolgt insbesondere über den Abstand der Reinigungsvorrichtung 104 zur Scheuersaugmaschine 112. Wie ausgeführt kann der Abstand beispielsweise anhand einer Laufzeitmessung, anhand einer Phasenverschiebung und/oder anhand einer Signalstärke der Identifikationsinformation errechnet werden. Weiter wird zur robusten Positionsermittlung der Winkel bestimmt, aus dem die Identifikationsinformation empfangen wird.

Bei Einsatz einer Bluetooth-LE-Funkverbindung besteht zum Beispiel die integrierte Möglichkeit, einen Winkel zwischen der Scheuersaugmaschine 112 und der Reinigungsvorrichtung 104 zu bestimmen. Zu diesem Zweck ist in Bluetooth LE 5.1 eine Funktion "Direction Finding" vorgesehen. Die weitere Funktion "Bluetooth Channel Sounding" erlaubt es, den Abstand der Reinigungsvorrichtungen 102, 104 voneinander zu bestimmen. Aus den Werten für den Winkel und den Abstand wird die Position der Reinigungsvorrichtung 104 im Hilfskoordinatensystem bestimmt.

Bei Einsatz einer UWB-Funkverbindung ist die Bestimmung der Position der Reinigungsvorrichtung 104 ebenfalls möglich.

Aus energetischen Gründen bietet sich der Einsatz der Bluetooth-Verbindung an. Bei Nutzung einer UWB-Funkverbindung könnte vorgesehen sein, dass aufgrund des höheren Energiebedarfs eine selektive Aktivierung des UWB-Funkkanals über einen weiteren Kanal, der zum Beispiel auf Bluetooth basieren kann, erfolgt. Dies erweist sich zum Beispiel bei batteriebetriebenen Reinigungsvorrichtungen 104 als vorteilhaft.

Günstigerweise werden beide derartige Funkkanäle über dasselbe Kommunikationsglied 150 bereitgestellt.

Anstelle eines zweiten Funkkanals könnte die Aktivierung des UWB-Funkkanals über einen Sensor in der sekundären Reinigungsvorrichtung 104 erfolgen. Denkbar ist zum Beispiel ein Beschleunigungssensor, der auf eine Bewegung reagiert.

Vorgesehen sein kann, dass das Kommunikationsglied 150 mit einer Energieerntefunktion (Energy Harvesting) versehen ist und die Kommunikationseinheit 120 mit einem Reichweitenladungsmodul (Long Range Wireless Charging), um erforderliche Energie über die Funkverbindung bereitzustellen, so dass eine Batterie im Kommunikationsglied 150 eingespart werden kann.

Es kann optional vorgesehen sein, dass nicht nur die Position der Reinigungsvorrichtung 104 ermittelt wird, sondern auch deren Orientierung, so dass insgesamt deren Pose bestimmt wird. Dies ist jedoch nicht zwingend erforderlich.

Die absolute Position der Scheuersaugmaschine 112 im geographischen Referenzkoordinatensystem 110 kann zum Beispiel unter Nutzung des Positionssensors 124 festgestellt werden. Um die Orientierung der der Scheuersaugmaschine 112 im geographischen Referenzkoordinatensystem 110 zu bestimmen, kann die Scheuersaugmaschine 112 einen Kompasssensor aufweisen. Es kann somit insgesamt die Pose der Scheuersaugmaschine 112 im Referenzkoordinatensystem 110 bestimmt werden.

Da die Relativposition der jeweiligen Reinigungsvorrichtung 104 zur Scheuersaugmaschine im Hilfskoordinatensystem bekannt ist - ermittelt insbesondere anhand des Abstandes und des Winkels, wie vorstehend erläutert -, besteht für die Datenverarbeitungseinheit 116 und/oder 138 ferner die Möglichkeit, die Positionen der Reinigungsvorrichtungen 104 ebenfalls im Referenzkoordinatensystem 110 zu bestimmen. Positionssensoren 124 und Umgebungssensoren 126 sind bei den Reinigungsvorrichtungen 104 zu diesem Zweck nicht erforderlich.

Die Positionsinformationen über die Reinigungsvorrichtungen 102, 104 im Referenzkoordinatensystem 110 können vorzugsweise über eine Kommunikationsverbindung 154 von der Scheuersaugmaschine 112 an die Datenverarbeitungseinheit 138 übertragen werden, sofern sie nicht ohnehin von dieser berechnet wurden. Dies dient beispielsweise zum Zwecke der Überwachung der Reinigungsvorrichtungen 102 und 104.

Wird die Position der Reinigungsvorrichtungen 104 zeitabhängig erfasst, können zurückgelegte Wege und damit die Abarbeitung von Reinigungsaufgaben zur Kontrolle der Reinigung ebenfalls ermittelt werden.

Die Positionsinformationen können von der Datenverarbeitungseinheit 138 beispielsweise genutzt werden, um einen Bericht zu erstellen.

**In** der Speichereinheit 118 kann eine Umgebungskarte 156 der Umgebung 134 gespeichert sein. Die Karte 156 kann beispielsweise eigenständig von der Scheuersaugmaschine 112 erstellt werden oder von einem Benutzer 114 bereitgestellt werden.

Die Positionen der Reinigungsvorrichtungen 102, 104 können in der Karte 156 gespeichert werden. Die Karte 156 kann ebenfalls an die Datenverarbeitungseinheit 138 übertragen werden.

Eine korrekte Orientierung und Skalierung der Karte 156 im Referenzkoordinatensystem 110 kann ebenfalls vorgenommen werden. Zu diesem Zweck kann die Scheuersaugmaschine 112 zum Beispiel zu zwei oder mehr unterschiedlichen Ankerpositionen in der Umgebung 134 verfahren, und die jeweiligen Positionen können in der Karte 156 eingetragen werden. Je nachdem, ob die Reinigungsvorrichtungen 102 autonom sind oder nicht, können die Ankerposition selbsttätig oder unter Führung durch einen Benutzer angefahren werden.

Für die Transformation einer Positionsinformation der Karte 156 in das Referenzkoordinatensystem 110 können alle vorhandenen sensorischen Informationen und oder ortungsbasierten Information verwendet werden: Positionssensor 124, Umgebungssensoren 126, Sensor(en) 152, Funkortung und/oder Indoorlokalisierung. Hierauf wurde bereits eingegangen. Im Ergebnis kann die Karte 156 orientierungsrichtig und in der Größe korrekt skaliert im Referenzkoordinatensystem 110 dargestellt werden, gewissermaßen kann die skalierte Karte 156 "eingenordet" werden.

Alternativ oder ergänzend können Ankerpositionen manuell durch den Benutzer 114 in der Umgebungskarte 156 eintragbar sein. Hierzu kann sich der Benutzer 114 zum Beispiel einer Eingabeeinheit des Smartphones 162 und/oder der Reinigungsvorrichtung 102 bedienen.

Die Visualisierung der Positionen der Reinigungsvorrichtungen 102, 104 über die Karte 156 bietet dem Benutzer 114 eine intuitive Möglichkeit, die Vorrichtungen 102, 104 zu überwachen. Beispielsweise kann die Datenverarbeitungseinheit 116 und/oder 138 zu diesem Zweck mit einer Anzeigeeinheit 158 gekoppelt sein.

Vorgesehen sein kann, dass das Reinigungssystem 100 ein tragbares Zusatzgerät 160 aufweist, beispielsweise ausgestaltet als Smartphone 162. Das Zusatzgerät 160 kann mit der Scheuersaugmaschine 112 gekoppelt werden, zum Beispiel über Bluetooth. Denkbar ist, dass an der Scheuersaugmaschine 112 eine Aufnahme für das Zusatzgerät 160 vorhanden ist, um eine definierte Position sicherzustellen.

Das Smartphone 162 weist seinerseits eine Datenverarbeitungseinheit 164, eine Speichereinheit 166, eine Kommunikationseinheit 168 und eine Anzeigeeinheit 170 auf. Ferner ist eine Lokalisierungseinheit 172 vorgesehen. Die Einheiten 164 bis 172 können alternativ oder ergänzend zu den Einheiten 116 bis 120, 136 eingesetzt werden. Die vorstehend beschriebenen Operationen können gewissermaßen an das gekoppelte Zusatzgerät 160 ausgelagert werden. Es versteht sich, dass die Übertragung etwaiger Positionsinformationen und der Karte 156 an die Datenverarbeitungseinheit 138 ebenfalls möglich sind.

Bei Nutzung des Zusatzgerätes 160, insbesondere des Smartphones 162, kann vorzugsweise vorgesehen sein, dass absolute Positionen von Ankerpositionen mittels des Smartphones 162 zuordenbar sind.

Wie bereits erwähnt, kann vorgesehen sein, dass mehr als nur eine primäre Reinigungsvorrichtung 102 insbesondere in der Umgebung 134 vorhanden ist und dass jedes Kommunikationsglied 150 mit der Kommunikationseinheit 120 jeder Reinigungsvorrichtung 102 in Funkverbindung steht. Auf diese Weise können die Positionen der Reinigungsvorrichtung 104 noch genauer bestimmt werden.

Denkbar ist, dass die Scheuersaugmaschine 112 ihre Position im Referenzkoordinatensystem 110, bei dem es sich vorliegend um das geographische Koordinatensystem handelt, nicht selbst bestimmen kann. Es kann vorgesehen sein, dass die Relativposition der Reinigungsvorrichtungen 102, 104 an die räumlich entfernt angeordnete Datenverarbeitungseinheit 138 übermittelt wird. Die Datenverarbeitungseinheit 138 kann vorzugsweise die Position der Scheuersaugmaschine 112 im Referenzkoordinatensystem 110 und damit auch die Positionen der Reinigungsvorrichtung 104 im Referenzkoordinatensystem 110 bestimmen.

Um die Position der Scheuersaugmaschine 112 im Referenzkoordinatensystem 110 zu bestimmen, kann beispielsweise die übertragene Karte 156 herangezogen werden, in der die Position der Scheuersaugmaschine 112 gespeichert ist. Kann die Karte 156 im Referenzkoordinatensystem 110 korrekt verortet werden (beispielsweise, weil Informationen über das Gebäude 108 bekannt sind), lässt sich dadurch auch die Position der Scheuersaugmaschine 112 bestimmen.

Wie bereits ausgeführt, kann vorgesehen sein, dass eine Bestimmung der absoluten Position von der Scheuersaugmaschine 112 unter Ausnutzung einer WLAN-Ortung oder andersartigen Funknetz-Ortung (z.B. einer Mobilfunknetz-Ortung) durchgeführt werden kann. Diese Methoden der Ortung können beispielsweise mit einer Ortung basierend auf den Daten des mindestens eines weiteren Sensors zur Plausibilitätsprüfung oder zur Bereitstellung einer redundanten Positionsinformation kombiniert werden. Ein Einsatz des absoluten Positionssensors 124, jedenfalls in Außenbereichen, ist hierbei denkbar und bevorzugt.

Alternativ oder ergänzend könnte eine absolute Positionsbestimmung der primären Reinigungsvorrichtung 102 zum Beispiel mittels Radodometrie und Ausnutzung von Daten des Odometriesensors plausibilisiert werden und/oder zur Bestimmung der Orientierung der Reinigungsvorrichtung 102 herangezogen werden.

Die Bezugszeichen 174 in Figur 1 kennzeichnen Komponenten einer Installation im Gebäude 108, beispielsweise in Form von Routern oder sogenannten Access Points, die für die WLAN-Ortung oder Mobilfunknetz-Ortung von der Scheuersaugmaschine 112 herangezogen werden können.

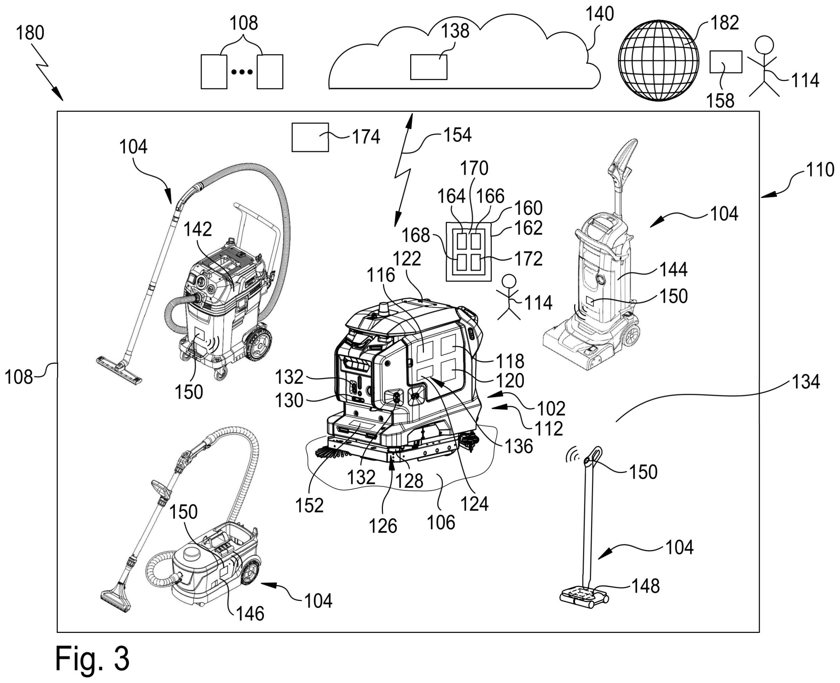

Figur 3 zeigt eine mit dem Bezugszeichen 180 belegte vorteilhafte Ausführungsform des erfindungsgemäßen Reinigungssystems. Für gleiche oder gleichwirkende Merkmale und Bauteile der Reinigungssysteme 100, 180 werden identische Bezugszeichen benutzt. Die vorstehend beschriebenen Wirkungen und Vorteile können beim Reinigungssystem 180 ebenfalls erzielt werden. Es wird nur auf die wesentlichen Unterschiede eingegangen.

Beim Reinigungssystem 180 ist das Referenzkoordinatensystem 110 nicht das geographische Koordinatensystem, das in Figur 3 mit dem Bezugszeichen 182 belegt ist. Stattdessen ist das Referenzkoordinatensystem 110 durch das Gebäude 108 definiert. Positionsinformationen der Reinigungsvorrichtungen 102, 104 können im System des Gebäudes 108 ermittelt werden, ebenso Orientierungsinformationen. Zu diesem Zweck kann die Karte 156 genutzt werden.

Eine Übertragung der Positionsinformationen und Orientierungsinformationen an die Datenverarbeitungseinheit 138 ebenso wie eine Übertragung der Karte 156 ist in diesem Fall ebenso möglich. Darüber hinaus besteht die Möglichkeit, die Karte 156 in ihrer Orientierung und Skalierung an eine Karte des Gebäudes 108 unter Nutzung der jeweiligen Ankerpositionen anzupassen. Beispielsweise sind die Ankerpositionen mit Hilfe der primären Reinigungsvorrichtung 102 in der Karte 156 der Umgebung erzeugbar und sind in das Referenzkoordinatensystem 110 übertragbar.

Die Datenverarbeitungseinheit 138 kann beispielsweise die Positionsinformation in absolute Positionen im geographischen Koordinatensystem 182 umrechnen. Dies ist beispielsweise unter Ausnutzung von Informationen über das Gebäude 108 möglich, wie dies bereits erläutert wurde.

Die voranstehende Beschreibung umfasst insbesondere die anhand nachfolgender Sätze definierten vorteilhaften Ausführungsformen eines erfindungsgemäßen Reinigungssystems und eines erfindungsgemäßen Verfahrens zum Betreiben eines Reinigungssystems.
1. Reinigungssystem (100; 180), umfassend
   mindestens eine Datenverarbeitungseinheit (116, 138, 164),
   eine primäre Reinigungsvorrichtung (102) und mindestens eine sekundäre Reinigungsvorrichtung (104), die in einer Umgebung (134) der primären Reinigungsvorrichtung (102) positioniert ist, insbesondere in demselben Gebäude (108) wie die primäre Reinigungsvorrichtung (102), wobei die primäre Reinigungsvorrichtung (102) in einem Referenzkoordinatensystem (110) positioniert ist und eine Kommunikationseinheit (120, 168) aufweist oder eine Kommunikationseinheit (120, 168) an der primären Reinigungsvorrichtung (102) angeordnet oder mit dieser gekoppelt ist,
   wobei die mindestens eine sekundäre Reinigungsvorrichtung (104) ein Kommunikationsglied (150) umfasst, das ausgestaltet ist, eine Identifikationsinformation, die indikativ für die mindestens eine sekundäre Reinigungsvorrichtung (104) ist, per Funkverbindung an die Kommunikationseinheit (120, 168) zu übermitteln,
   wobei mittels der mindestens einen Datenverarbeitungseinheit (116, 138, 164) basierend auf einem Signal der Kommunikationseinheit (120, 168) eine Position der mindestens einen sekundären Reinigungsvorrichtung (104) relativ zur primären Reinigungsvorrichtung (102) ermittelbar ist, insbesondere in einem von der primären Reinigungsvorrichtung (102) definierten Hilfskoordinatensystem,
   und wobei mittels der mindestens einen Datenverarbeitungseinheit (116, 138, 164) die Position der primären Reinigungsvorrichtung (102) im Referenzkoordinatensystem (110) ermittelbar und die Position der mindestens einen sekundären Reinigungsvorrichtung (104) im Referenzkoordinatensystem (110) ermittelbar ist.
2. Reinigungssystem (100; 180) nach Satz 1,
   **dadurch gekennzeichnet, dass**
   das Referenzkoordinatensystem (110) ein absolutes Koordinatensystem ist, insbesondere ein geographisches Koordinatensystem (182).
3. Reinigungssystem (100; 180) nach Satz 1,
   **dadurch gekennzeichnet, dass**
   das Referenzkoordinatensystem (110) ein relatives Koordinatensystem ist, beispielsweise ein Koordinatensystem eines Gebäudes (108), in dem die primäre Reinigungsvorrichtung (102) und die mindestens eine sekundäre Reinigungsvorrichtung (104) angeordnet sind.
4. Reinigungssystem (100; 180) nach einem der voranstehenden Sätze,
   **dadurch gekennzeichnet, dass**
   die primäre Reinigungsvorrichtung (102) eine Lokalisierungseinheit (136, 172) mit mindestens einem absoluten Positionssensor (124) und/oder mindestens einem Umgebungssensor (126) umfasst und/oder dass mindestens ein Sensor aus der Menge Magnetfeldsensor, Beschleunigungssensor, Odometriesensor, Drehratensensor, Kompasssensor oder Höhensensor vorgesehen ist.
5. Reinigungssystem (100; 180) nach einem der voranstehenden Sätze,
   **dadurch gekennzeichnet, dass**
   eine Positionsbestimmung für die primäre Reinigungsvorrichtung (102) im Referenzkoordinatensystem (110) mittels WLAN-Ortung oder andersartiger Funknetz-Ortung, insbesondere Mobilfunknetz-Ortung, durchführbar ist.
6. Reinigungssystem (100; 180) nach einem der voranstehenden Sätze,
   **dadurch gekennzeichnet, dass**
   das Reinigungssystem (100; 180) ein tragbares Zusatzgerät (160) umfasst, insbesondere ein Smartphone (162), das mit der primären Reinigungsvorrichtung (102) elektronisch koppelbar ist, und das für die primäre Reinigungsvorrichtung (102) mindestens eines der Folgenden bereitstellt:
   - eine Datenverarbeitungseinheit (164);
   - eine Kommunikationseinheit (168);
   - eine Lokalisierungseinheit (172) mit mindestens einem absoluten Positionssensor und/oder mindestens einem Umgebungssensor;
   - mindestens ein Sensor aus der Menge Magnetfeldsensor, Beschleunigungssensor, Odometrie, Drehratensensor, Kompasssensor oder Höhensensor;
   - eine Speichereinheit (166);
   - eine Anzeigeeinheit (170).
7. Reinigungssystem (100; 180) nach einem der voranstehenden Sätze,
   **dadurch gekennzeichnet, dass**
   das Kommunikationsglied (150) lösbar an der oder in der mindestens einen sekundären Reinigungsvorrichtung (104) angeordnet ist oder an oder in der mindestens einen sekundären Reinigungsvorrichtung (104) fest verbaut ist.
8. Reinigungssystem (100; 180) nach einem der voranstehenden Sätze,
   **dadurch gekennzeichnet, dass**
   dass die Identifikationsinformation von der mindestens einen sekundären Reinigungsvorrichtung (104) an die primäre Reinigungsvorrichtung (102) abhängig vom Bestehen eines Signals in der mindestens einen sekundären Reinigungsvorrichtung (104) übermittelbar ist.
9. Reinigungssystem (100; 180) nach einem der voranstehenden Sätze,
   **dadurch gekennzeichnet, dass**
   die Identifikationsinformation vom Kommunikationsglied (150) an die Kommunikationseinheit (120, 168) erst nach einer diesbezüglichen Aufforderungsinformation zum Bereitstellen der Identifikationsinformation übermittelt wird oder dass die Identifikationsinformation vom Kommunikationsglied (150) spontan, insbesondere periodisch, an die Kommunikationseinheit (120, 168) übermittelt wird.
10. Reinigungssystem (100; 180) nach einem der voranstehenden Sätze,
   **dadurch gekennzeichnet, dass**
   die Identifikationsinformation mindestens eines der Folgenden in Bezug auf die mindestens eine sekundäre Reinigungsvorrichtung (104) umfasst:
   - eine Information betreffend den Typ;
   - eine Information betreffend eine Seriennummer der Reinigungsvorrichtung (104) und/oder eine Seriennummer des Kommunikationsgliedes (150), beispielsweise eine MAC-Adresse;
   - eine Information betreffend einen Arbeitszustand;
   - eine Information betreffend einen Arbeitsplan;
   - eine Information betreffend eine oder mehrere verbrauchbare Komponente(n) zur Erfüllung einer Reinigungsaufgabe.
11. Reinigungssystem (100; 180) nach einem der voranstehenden Sätze,
   **dadurch gekennzeichnet, dass**
   die Kommunikationseinheit (120, 168) und das Kommunikationsglied (150) zum Eingehen einer Bluetooth-Funkverbindung, einer UWB (ultra wide band)-Funkverbindung, einer WPAN-Funkverbindung und/oder einer WLAN-Verbindung ausgestaltet sind.
12. Reinigungssystem (100; 180) nach einem der voranstehenden Sätze,
   **dadurch gekennzeichnet, dass**
   von der mindestens einen Datenverarbeitungseinheit (116, 138, 164) ergänzend zur Position eine Orientierung der mindestens einen primären Reinigungsvorrichtung (104) im Referenzkoordinatensystem ermittelbar ist.
13. Reinigungssystem (100; 180) nach einem der voranstehenden Sätze,
   **dadurch gekennzeichnet, dass**
   von der mindestens einen Datenverarbeitungseinheit (116, 138, 164) eine Position der mindestens einen sekundären Reinigungsvorrichtung (104) als Funktion der Zeit ermittelbar ist, insbesondere im Hinblick auf eine Bestimmung eines von der mindestens einen sekundären Reinigungsvorrichtung (104) zurückgelegten Weges, speziell zur Reinigungskontrolle.
14. Reinigungssystem (100; 180) nach einem der voranstehenden Sätze,
   **dadurch gekennzeichnet, dass**
   eine Entfernung zwischen dem Kommunikationsglied (150) und der Kommunikationseinheit (120, 186) auf mindestens eine der folgenden Weisen bestimmbar ist:
   - über eine Signalstärke der Funkverbindung;
   - über eine Laufzeitmessung eines Signals und/oder eine Phasenveränderung eines Signals zwischen dem Kommunikationsglied (150) und der Kommunikationseinheit (120, 186).
15. Reinigungssystem (100; 180) nach einem der voranstehenden Sätze,
   **dadurch gekennzeichnet, dass**
   mindestens eines der Folgenden gilt:
   - eine Datenverarbeitungseinheit (116) der primären Reinigungsvorrichtung (102) oder eine Datenverarbeitungseinheit (164) eines mit der primären Reinigungsvorrichtung (102) gekoppelten Zusatzgerätes (160) ist zur Ermittlung der Position der mindestens einen sekundären Reinigungsvorrichtung (104) relativ zur primären Reinigungsvorrichtung (102) ausgebildet und eingerichtet;
   - eine räumlich entfernt von der primären Reinigungsvorrichtung (102) angeordnete Datenverarbeitungseinheit (138) ist zur Ermittlung der Position der mindestens einen sekundären Reinigungsvorrichtung (104) relativ zur primären Reinigungsvorrichtung (102) ausgebildet und eingerichtet.
16. Reinigungssystem (100; 180) nach einem der voranstehenden Sätze,
   **dadurch gekennzeichnet, dass**
   mindestens eines der Folgenden gilt:
   - eine Datenverarbeitungseinheit (116) der primären Reinigungsvorrichtung (102) oder eine Datenverarbeitungseinheit (164) eines mit der primären Reinigungsvorrichtung (102) gekoppelten Zusatzgerätes (160) ist zur Ermittlung der Position der primären Reinigungsvorrichtung (102) im Referenzkoordinatensystem (110) ausgebildet und eingerichtet und/oder zur Ermittlung der Position der mindestens einen sekundären Reinigungsvorrichtung (104) im Referenzkoordinatensystem (110) ausgebildet und eingerichtet;
   - eine räumlich entfernt von der primären Reinigungsvorrichtung (102) angeordnete Datenverarbeitungseinheit (164) ist zur Ermittlung der Position der primären Reinigungsvorrichtung (102) im Referenzkoordinatensystem (110) ausgebildet und eingerichtet und/oder zur Ermittlung der Position der mindestens einen sekundären Reinigungsvorrichtung (104) im Referenzkoordinatensystem (110) ausgebildet und eingerichtet, wobei die primäre Reinigungsvorrichtung (102) mit der räumlich entfernt angeordneten Datenverarbeitungseinheit (138) über eine Kommunikationsverbindung (154) verbunden oder verbindbar ist.
17. Reinigungssystem (100; 180) nach einem der voranstehenden Sätze,
   **dadurch gekennzeichnet, dass**
   das Reinigungssystem (100; 180) eine räumlich entfernt von der primären Reinigungsvorrichtung (102) angeordnete Datenverarbeitungseinheit (138) umfasst, an die die Position der primären Reinigungsvorrichtung (102) im Referenzkoordinatensystem (110) und/oder die Position der mindestens einen sekundären Reinigungsvorrichtung (104) im Referenzkoordinatensystem (110) übermittelbar ist.
18. Reinigungssystem (100; 180) nach einem der voranstehenden Sätze,
   **dadurch gekennzeichnet, dass**
   die Position der mindestens einen sekundären Reinigungsvorrichtung (104) relativ zur primären Reinigungsvorrichtung mittels Triangulation und/oder Trilateration ermittelbar ist und/oder durch Entfernungsmessung zur primären Reinigungsvorrichtung (102) und Winkelmessung zur primären Reinigungsvorrichtung (102).
19. Reinigungssystem (100; 180) nach einem der voranstehenden Sätze,
   **dadurch gekennzeichnet, dass**
   das Reinigungssystem (100; 180) mindestens eine weitere primäre Reinigungsvorrichtung (102) und eine weitere Kommunikationseinheit (120, 168) umfasst und dass die Identifikationsinformation an diese weitere Kommunikationseinheit (120, 168) übermittelbar ist, wobei die Position der mindestens einen sekundären Reinigungsvorrichtung (104) im Referenzkoordinatensystem (110) von der mindestens einen Datenverarbeitungseinheit (116, 138, 164) unter Berücksichtigung der jeweiligen Identifikationsinformation ermittelbar ist, die an die primäre Reinigungsvorrichtung (102) und die weitere primäre Reinigungsvorrichtung (102) übermittelt wird.
20. Reinigungssystem (100; 180) nach einem der voranstehenden Sätze,
   **dadurch gekennzeichnet, dass**
   das Reinigungssystem (100; 180) mindestens eine Speichereinheit (118, 166) umfasst, in der eine Umgebungskarte (156) der Umgebung (134) gespeichert ist, und dass eine Position und/oder Orientierung der primären Reinigungsvorrichtung (102) und/oder der mindestens einen sekundären Reinigungsvorrichtung (104) in der Umgebungskarte (156) insbesondere zeitabhängig speicherbar ist.
21. Reinigungssystem (100; 180) nach Satz 20,
   **dadurch gekennzeichnet, dass**
   mindestens eines der Folgenden gilt:
   - die primäre Reinigungsvorrichtung (102) umfasst eine Speichereinheit (118,);
   - eine Speichereinheit ist räumlich entfernt von der primären Reinigungsvorrichtung (102) angeordnet;
   - ein mit der primären Reinigungsvorrichtung (102) gekoppeltes Zusatzgerät (160) umfasst eine Speichereinheit (166).
22. Reinigungssystem (100; 180) nach einem der voranstehenden Sätze,
   **dadurch gekennzeichnet, dass**
   die primäre Reinigungsvorrichtung (102) an zwei oder mehr voneinander unterschiedliche Ankerpositionen in der Umgebung (134) verfahrbar und in der Umgebungskarte (156) oder in einer absoluten Karte des Referenzkoordinatensystems (100) eine jeweilige Ankerposition speicherbar ist und dass eine Orientierung und eine Skalierung der Umgebungskarte (156) relativ zur absoluten Karte oder umgekehrt von der mindestens einen Datenverarbeitungseinheit (116, 138, 164) durchführbar ist, indem den Ankerpositionen Referenzpositionen der primären Reinigungsvorrichtung (102) im Referenzkoordinatensystem (110) zugeordnet werden, oder indem den Ankerpositionen Positionen der primären Reinigungsvorrichtung (102) in der Umgebungskarte zugeordnet werden, wobei das Referenzkoordinatensystem (110) insbesondere ein geographisches Koordinatensystem ist.
23. Reinigungssystem (100; 180) nach einem der voranstehenden Sätze,
   **dadurch gekennzeichnet, dass**
   das Reinigungssystem (100; 180) mindestens eine Anzeigeeinheit (122, 158, 170) umfasst zum Darstellen einer absoluten Karte und/oder einer Umgebungskarte (156) der Umgebung (134) der primären Reinigungsvorrichtung (102) und dass die Position der mindestens einen sekundären Reinigungsvorrichtung (104) und/oder der primären Reinigungsvorrichtung (102) in der absoluten Karte und/oder der Umgebungskarte (156) darstellbar ist.
24. Reinigungssystem (100; 180) nach Satz 23,
   **dadurch gekennzeichnet, dass**
   mindestens eines der Folgenden gilt:
   - die primäre Reinigungsvorrichtung (102) umfasst eine Anzeigeeinheit (122);
   - eine Anzeigeeinheit (158) ist räumlich entfernt von der primären Reinigungsvorrichtung (102) angeordnet;
   - ein mit der primären Reinigungsvorrichtung (102) gekoppeltes Zusatzgerät (160) umfasst eine Anzeigeeinheit (170).
25. Reinigungssystem (100; 180) nach einem der voranstehenden Sätze,
   **dadurch gekennzeichnet, dass**
   von der mindestens einen Datenverarbeitungseinheit (116, 138, 164) ein Bericht über die Position der mindestens einen sekundären Reinigungsvorrichtung (104) und/oder der primären Reinigungsvorrichtung (102) erstellbar ist, insbesondere über die Position(en) als Funktion der Zeit.
26. Reinigungssystem (100; 180) nach einem der voranstehenden Sätze,
   **dadurch gekennzeichnet, dass**
   zumindest eines der Folgenden gilt:
   - die primäre Reinigungsvorrichtung (102) und/oder die mindestens eine sekundäre Reinigungsvorrichtung (104) ist ein Flächenreinigungsgerät und/oder mobil ausgestaltet;
   - die primäre Reinigungsvorrichtung (102) ist eine Bodenreinigungsvorrichtung, insbesondere eine Scheuersaugmaschine (112) oder eine Kehrmaschine;
   - die primäre Reinigungsvorrichtung (102) ist ein Reinigungswagen;
   - die primäre Reinigungsvorrichtung (102) ist handgeführt und/oder selbstlenkend und selbstfahrend ausgestaltet;
   - die mindestens eine sekundäre Reinigungsvorrichtung (104) umfasst oder bildet ein Sauggerät (142), ein Wischgerät (148), ein Sprühextraktionsgerät (146), ein Dampfreinigungsgerät, ein Hartflächenreinigungsgerät (144), ein Kehrgerät oder ein Hochdruckreinigungsgerät.
27. Verfahren zum Betreiben eines Reinigungssystems (100; 180), insbesondere nach einem der voranstehenden Sätze, umfassend:
   - Ermitteln einer Position einer primären Reinigungsvorrichtung (102) in einem Referenzkoordinatensystem (110);
   - Übermitteln mindestens einer Identifikationsinformation, die indikativ für mindestens eine sekundäre Reinigungsvorrichtung (104) ist, per Funkverbindung;
   - Ermitteln einer Position der mindestens einen sekundären Reinigungsvorrichtung (104) relativ zur primären Reinigungsvorrichtung; und
   - Ermitteln einer Position der mindestens einen sekundären Reinigungsvorrichtung (104) im Referenzkoordinatensystem (110).

### Bezugszeichenliste

- 100, 180: Reinigungssystem
- 102: primäre Reinigungsvorrichtung
- 104: sekundäre Reinigungsvorrichtung
- 106: Bodenfläche
- 108: Gebäude
- 110: Referenzkoordinatensystem
- 112: Scheuersaugmaschine
- 114: Benutzer
- 116, 138, 164: Datenverarbeitungseinheit
- 118, 166: Speichereinheit
- 120, 168: Kommunikationseinheit
- 122, 158, 170: Anzeigeeinheit
- 124: Positionssensor
- 126: Umgebungssensor
- 128: Lidar
- 130: Kamera
- 132: Ultraschallsensor
- 134: Umgebung
- 136, 172: Lokalisierungseinheit
- 140: Cloud
- 142: Sauggerät
- 144: Hartflächenreinigungsgerät
- 146: Sprühextraktionsgerät
- 148: Wischgerät
- 150: Kommunikationsglied
- 152: Sensor
- 154: Kommunikationsverbindung
- 156: Karte
- 160: Zusatzgerät
- 162: Smartphone
- 174: Router
- 182: geographisches Koordinatensystem

## Patentansprüche

1. Reinigungssystem (100; 180), umfassend
mindestens eine Datenverarbeitungseinheit (116, 138, 164),
eine primäre Reinigungsvorrichtung (102) und mindestens eine sekundäre Reinigungsvorrichtung (104), die in einer Umgebung (134) der primären Reinigungsvorrichtung (102) positioniert ist, insbesondere in demselben Gebäude (108) wie die primäre Reinigungsvorrichtung (102), wobei die primäre Reinigungsvorrichtung (102) in einem Referenzkoordinatensystem (110) positioniert ist und eine Kommunikationseinheit (120, 168) aufweist oder eine Kommunikationseinheit (120, 168) an der primären Reinigungsvorrichtung (102) angeordnet oder mit dieser gekoppelt ist,
wobei die mindestens eine sekundäre Reinigungsvorrichtung (104) ein Kommunikationsglied (150) umfasst, das ausgestaltet ist, eine Identifikationsinformation, die indikativ für die mindestens eine sekundäre Reinigungsvorrichtung (104) ist, per Funkverbindung an die Kommunikationseinheit (120, 168) zu übermitteln,
wobei mittels der mindestens einen Datenverarbeitungseinheit (116, 138, 164) basierend auf einem Signal der Kommunikationseinheit (120, 168) eine Position der mindestens einen sekundären Reinigungsvorrichtung (104) relativ zur primären Reinigungsvorrichtung (102) ermittelbar ist, insbesondere in einem von der primären Reinigungsvorrichtung (102) definierten Hilfskoordinatensystem,
und wobei mittels der mindestens einen Datenverarbeitungseinheit (116, 138, 164) die Position der primären Reinigungsvorrichtung (102) im Referenzkoordinatensystem (110) ermittelbar und die Position der mindestens einen sekundären Reinigungsvorrichtung (104) im Referenzkoordinatensystem (110) ermittelbar ist.

2. Reinigungssystem (100; 180) nach Anspruch 1,
**dadurch gekennzeichnet, dass**
das Referenzkoordinatensystem (110) ein absolutes Koordinatensystem ist, insbesondere ein geographisches Koordinatensystem (182) oder dass das Referenzkoordinatensystem (110) ein relatives Koordinatensystem ist, beispielsweise ein Koordinatensystem eines Gebäudes (108), in dem die primäre Reinigungsvorrichtung (102) und die mindestens eine sekundäre Reinigungsvorrichtung (104) angeordnet sind.

3. Reinigungssystem (100; 180) nach einem der voranstehenden Ansprüche,
**dadurch gekennzeichnet, dass**
die primäre Reinigungsvorrichtung (102) eine Lokalisierungseinheit (136, 172) mit mindestens einem absoluten Positionssensor (124) und/oder mindestens einem Umgebungssensor (126) umfasst und/oder dass mindestens ein Sensor aus der Menge Magnetfeldsensor, Beschleunigungssensor, Odometriesensor, Drehratensensor, Kompasssensor oder Höhensensor vorgesehen ist.

4. Reinigungssystem (100; 180) nach einem der voranstehenden Ansprüche, **dadurch gekennzeichnet, dass**
das Reinigungssystem (100; 180) ein tragbares Zusatzgerät (160) umfasst, insbesondere ein Smartphone (162), das mit der primären Reinigungsvorrichtung (102) elektronisch koppelbar ist, und das für die primäre Reinigungsvorrichtung (102) mindestens eines der Folgenden bereitstellt:
- eine Datenverarbeitungseinheit (164);
- eine Kommunikationseinheit (168);
- eine Lokalisierungseinheit (172) mit mindestens einem absoluten Positionssensor und/oder mindestens einem Umgebungssensor;
- mindestens ein Sensor aus der Menge Magnetfeldsensor, Beschleunigungssensor, Odometrie, Drehratensensor, Kompasssensor oder Höhensensor;
- eine Speichereinheit (166);
- eine Anzeigeeinheit (170).

5. Reinigungssystem (100; 180) nach einem der voranstehenden Ansprüche,
**dadurch gekennzeichnet, dass**
das Kommunikationsglied (150) lösbar an der oder in der mindestens einen sekundären Reinigungsvorrichtung (104) angeordnet ist oder an oder in der mindestens einen sekundären Reinigungsvorrichtung (104) fest verbaut ist.

6. Reinigungssystem (100; 180) nach einem der voranstehenden Ansprüche,
**dadurch gekennzeichnet, dass**
dass die Identifikationsinformation von der mindestens einen sekundären Reinigungsvorrichtung (104) an die primäre Reinigungsvorrichtung (102) abhängig vom Bestehen eines Signals in der mindestens einen sekundären Reinigungsvorrichtung (104) übermittelbar ist.

7. Reinigungssystem (100; 180) nach einem der voranstehenden Ansprüche,
**dadurch gekennzeichnet, dass**
die Identifikationsinformation vom Kommunikationsglied (150) an die Kommunikationseinheit (120, 168) erst nach einer diesbezüglichen Aufforderungsinformation zum Bereitstellen der Identifikationsinformation übermittelt wird oder dass die Identifikationsinformation vom Kommunikationsglied (150) spontan, insbesondere periodisch, an die Kommunikationseinheit (120, 168) übermittelt wird.

8. Reinigungssystem (100; 180) nach einem der voranstehenden Ansprüche,
**dadurch gekennzeichnet, dass**
die Identifikationsinformation mindestens eines der Folgenden in Bezug auf die mindestens eine sekundäre Reinigungsvorrichtung (104) umfasst:
- eine Information betreffend den Typ;
- eine Information betreffend eine Seriennummer der Reinigungsvorrichtung (104) und/oder eine Seriennummer des Kommunikationsgliedes (150), beispielsweise eine MAC-Adresse;
- eine Information betreffend einen Arbeitszustand;
- eine Information betreffend einen Arbeitsplan;
- eine Information betreffend eine oder mehrere verbrauchbare Komponente(n) zur Erfüllung einer Reinigungsaufgabe.

9. Reinigungssystem (100; 180) nach einem der voranstehenden Ansprüche,
**dadurch gekennzeichnet, dass**
von der mindestens einen Datenverarbeitungseinheit (116, 138, 164) ergänzend zur Position eine Orientierung der mindestens einen primären Reinigungsvorrichtung (104) im Referenzkoordinatensystem ermittelbar ist.

10. Reinigungssystem (100; 180) nach einem der voranstehenden Ansprüche,
**dadurch gekennzeichnet, dass**
eine Entfernung zwischen dem Kommunikationsglied (150) und der Kommunikationseinheit (120, 186) auf mindestens eine der folgenden Weisen bestimmbar ist:
- über eine Signalstärke der Funkverbindung;
- über eine Laufzeitmessung eines Signals und/oder eine Phasenveränderung eines Signals zwischen dem Kommunikationsglied (150) und der Kommunikationseinheit (120, 186).

11. Reinigungssystem (100; 180) nach einem der voranstehenden Ansprüche,
**dadurch gekennzeichnet, dass**
das Reinigungssystem (100; 180) eine räumlich entfernt von der primären Reinigungsvorrichtung (102) angeordnete Datenverarbeitungseinheit (138) umfasst, an die die Position der primären Reinigungsvorrichtung (102) im Referenzkoordinatensystem (110) und/oder die Position der mindestens einen sekundären Reinigungsvorrichtung (104) im Referenzkoordinatensystem (110) übermittelbar ist.

12. Reinigungssystem (100; 180) nach einem der voranstehenden Ansprüche,
**dadurch gekennzeichnet, dass**
die Position der mindestens einen sekundären Reinigungsvorrichtung (104) relativ zur primären Reinigungsvorrichtung mittels Triangulation und/oder Trilateration ermittelbar ist und/oder durch Entfernungsmessung zur primären Reinigungsvorrichtung (102) und Winkelmessung zur primären Reinigungsvorrichtung (102).

13. Reinigungssystem (100; 180) nach einem der voranstehenden Ansprüche,
**dadurch gekennzeichnet, dass**
das Reinigungssystem (100; 180) mindestens eine weitere primäre Reinigungsvorrichtung (102) und eine weitere Kommunikationseinheit (120, 168) umfasst und dass die Identifikationsinformation an diese weitere Kommunikationseinheit (120, 168) übermittelbar ist, wobei die Position der mindestens einen sekundären Reinigungsvorrichtung (104) im Referenzkoordinatensystem (110) von der mindestens einen Datenverarbeitungseinheit (116, 138, 164) unter Berücksichtigung der jeweiligen Identifikationsinformation ermittelbar ist, die an die primäre Reinigungsvorrichtung (102) und die weitere primäre Reinigungsvorrichtung (102) übermittelt wird.

14. Reinigungssystem (100; 180) nach einem der voranstehenden Ansprüche,
**dadurch gekennzeichnet, dass**
das Reinigungssystem (100; 180) mindestens eine Speichereinheit (118, 166) umfasst, in der eine Umgebungskarte (156) der Umgebung (134) gespeichert ist, und dass eine Position und/oder Orientierung der primären Reinigungsvorrichtung (102) und/oder der mindestens einen sekundären Reinigungsvorrichtung (104) in der Umgebungskarte (156) insbesondere zeitabhängig speicherbar ist.

15. Reinigungssystem (100; 180) nach einem der voranstehenden Ansprüche,
**dadurch gekennzeichnet, dass**
die primäre Reinigungsvorrichtung (102) an zwei oder mehr voneinander unterschiedliche Ankerpositionen in der Umgebung (134) verfahrbar und in der Umgebungskarte (156) oder in einer absoluten Karte des Referenzkoordinatensystems (100) eine jeweilige Ankerposition speicherbar ist und dass eine Orientierung und eine Skalierung der Umgebungskarte (156) relativ zur absoluten Karte oder umgekehrt von der mindestens einen Datenverarbeitungseinheit (116, 138, 164) durchführbar ist, indem den Ankerpositionen Referenzpositionen der primären Reinigungsvorrichtung (102) im Referenzkoordinatensystem (110) zugeordnet werden, oder indem den Ankerpositionen Positionen der primären Reinigungsvorrichtung (102) in der Umgebungskarte zugeordnet werden, wobei das Referenzkoordinatensystem (110) insbesondere ein geographisches Koordinatensystem ist.

16. Reinigungssystem (100; 180) nach einem der voranstehenden Ansprüche,
**dadurch gekennzeichnet, dass**
das Reinigungssystem (100; 180) mindestens eine Anzeigeeinheit (122, 158, 170) umfasst zum Darstellen einer absoluten Karte und/oder einer Umgebungskarte (156) der Umgebung (134) der primären Reinigungsvorrichtung (102) und dass die Position der mindestens einen sekundären Reinigungsvorrichtung (104) und/oder der primären Reinigungsvorrichtung (102) in der absoluten Karte und/oder der Umgebungskarte (156) darstellbar ist.

17. Reinigungssystem (100; 180) nach einem der voranstehenden Ansprüche,
**dadurch gekennzeichnet, dass**
zumindest eines der Folgenden gilt:
- die primäre Reinigungsvorrichtung (102) und/oder die mindestens eine sekundäre Reinigungsvorrichtung (104) ist ein Flächenreinigungsgerät und/oder mobil ausgestaltet;
- die primäre Reinigungsvorrichtung (102) ist eine Bodenreinigungsvorrichtung, insbesondere eine Scheuersaugmaschine (112) oder eine Kehrmaschine;
- die primäre Reinigungsvorrichtung (102) ist ein Reinigungswagen;
- die primäre Reinigungsvorrichtung (102) ist handgeführt und/oder selbstlenkend und selbstfahrend ausgestaltet;
- die mindestens eine sekundäre Reinigungsvorrichtung (104) umfasst oder bildet ein Sauggerät (142), ein Wischgerät (148), ein Sprühextraktionsgerät (146), ein Dampfreinigungsgerät, ein Hartflächenreinigungsgerät (144), ein Kehrgerät oder ein Hochdruckreinigungsgerät.

18. Verfahren zum Betreiben eines Reinigungssystems (100; 180), insbesondere nach einem der voranstehenden Ansprüche, umfassend:
- Ermitteln einer Position einer primären Reinigungsvorrichtung (102) in einem Referenzkoordinatensystem (110);
- Übermitteln mindestens einer Identifikationsinformation, die indikativ für mindestens eine sekundäre Reinigungsvorrichtung (104) ist, per Funkverbindung;
- Ermitteln einer Position der mindestens einen sekundären Reinigungsvorrichtung (104) relativ zur primären Reinigungsvorrichtung; und
- Ermitteln einer Position der mindestens einen sekundären Reinigungsvorrichtung (104) im Referenzkoordinatensystem (110).
